# EUROPEAN PATENT SPECIFICATION

(11) **EP 4 533 074 B1**
(45) Date of publication and mention of the grant of the patent: **11.03.2026**
(21) Application number: 23731139.4
(22) Date of filing: 31.05.2023
(51) Int. Cl.: G01N 23/04, G06T 7/73

(54) **RADIATION IMAGING SYSTEM FOR INSPECTION OF ITEMS HAVING AN UNCERTAIN POSE AND METHOD THEREFOR**
STRAHLUNGSBILDGEBUNGSSYSTEM ZUR PRÜFUNG VON GEGENSTÄNDEN, DIE EINE UNSICHERE LAGE AUFWEISEN, UND VERFAHREN DAFÜR
SYSTÈME D'IMAGERIE PAR RAYONNEMENT POUR L'INSPECTION D'ARTICLES AYANT UNE POSE INCERTAINE ET PROCÉDÉ ASSOCIÉ

(30) Priority: 31.05.2022 EP 22176540
(43) Date of publication of application: 09.04.2025
(73) Proprietor: Deltaray BV, 3530 Houthalen-Helchteren (BE)
(72) Inventor: JAIN, Saurabh, 3001 Heverlee (BE); VLASSELAER, Jonas, 3040 Huldenberg (BE); LENAERTS, Bart, 3001 Heverlee (BE); AERTS, Steven, 3290 Schaffen (BE); HAMELINCK, Dirk, 2580 Beerzel-Putte (BE)
(74) Representative: Beck, Michaël Andries T.
(86) International application number: PCT/EP2023/064585
(87) International publication number: WO 2023/232891

(56) References cited:
- WO-A1-2009/132854
- WO-A1-2019/030449
- WO-A1-2020/002704
- DE-A1- 102015 222 480
- PRESENTI ALICE ET AL: "Dynamic angle selection for few-view X-ray inspection of CAD based objects", SPIE PROCEEDINGS; [PROCEEDINGS OF SPIE ISSN 0277-786X], SPIE, US, vol. 11072, 28 May 2019 (2019-05-28), pages 110722V - 110722V, XP060123235, ISBN: 978-1-5106-3673-6, DOI: 10.1117/12.2534894

## Description

### FIELD OF THE INVENTION

The present disclosure relates to the field of radiation imaging for testing and/or quality assurance of items in a wide range of industrial applications. Specifically, in the present disclosure a method and system are described by which the item inspection accuracy and efficiency using radiation imaging technology can be improved.

### BACKGROUND

In today's competitive environment, ensuring quality of manufactured products becomes an important advantage. In many cases, one deals with safety critical components, the quality of which is a stringent requirement that directly reduces potential risks. Many of the components can be small in size, and yet they constitute a vital role and place high requirement on their production systems. Moreover, the smaller a component, the more difficult it is to be manipulated and inspected for quality control.

In recent decades, X-ray technology has been widely used in the inspection of manufactured products environments in which quality is vital, such as the automotive industry. The main reason behind the popularity of X-ray imaging in product inspection is its ability to visualise, analyse and inspect items in a non-destructive way, making it ideally suited to inspect products or one or more components of which the product is assembled.

However, cycle time and volume requirements are crucial factors in quality inspection. The cycle time sets high demand on how fast the quality control has to be, and how it can be performed. The volume results in the large variation set, and makes it impossible for humans to do the inspection manually, or be able to understand the complete data set without use of computers and data analysis. The time and quality constraints therefore resulted in the development of automated item inspection system configured to perform item inspection without the interference of a human operator.

However, large sets of data can severely limit the performance of such automated inspection system. Tough data has an enormous impact on the system's efficiency, there is little correlation between the inspection quality and amount of data. For example, hundreds to thousands of X-ray projections can be acquired of the product, but they will add little to no improvement compared to a select few X-ray projections of specific regions of interest, specifically in which the presence of defects is expected. Moreover, such approach can suffer from long acquisition times, which reduces its the usability and feasibility for quality control.

WO 2020/002704 describes a method for determining an optimal viewing angle for the real image of an inspected item. However, the method primarily focuses on inspecting items on an individual basis, meaning that it is applied to inspect a single item before moving on to the next one. In relevant metrology or defect inspection applications, this approach can be time-consuming and inefficient in terms of resources. One of the challenges in such applications is that performing item-per-item inspections involves handling a single item on a holder and processing image data acquired specifically for that item, which introduces delays into the inspection process. In practice, it is often more efficient to inspect items in batches, simultaneously evaluating multiple items at once - depending on the volume and size of the inspected items.

Accordingly, the development of a novel item inspection approach wherein the acquisition and processing times can be limited by reducing the number of X-ray projections, may advantageously provide fast, e.g. near real-time, projection-based inspection in an in-line application for quality control, *e.g.* for defect detection or metrology.

### SUMMARY OF THE INVENTION

The present disclosure relates to the field of radiation imaging for testing and/or quality assurance of items in a wide range of industrial applications. Specifically, in the present disclosure a method and system are described to dynamically estimate an uncertain pose of item, i.e., when a position and/or orientation of the item is a-priori uncertain, e.g. only known up to a predetermined accuracy and/or only known for some parameters of the position and/or orientation, while unknown or only known up to a predetermined accuracy for at least one other parameter of the position and/or orientation.

For example, certain item parameters of the position and/or orientation may be known by mechanically manipulating the item into a specific pose or range of possible poses prior to inspection. However, such mechanical manipulation has a limited accuracy, especially when automated, compared to the accuracy required for inspection with a radiation imaging system, e.g. for defect detection. Present solutions consider verifying the placement of the item, e.g. by individual inspection, or proactively compensating for mispositioning errors by taking a wider range of images, i.e., across a range of different angles. However, both solution substantially increase the inspection and processing times per item and fail to minimise measurement errors still.

As previously discussed, a significant concern in item inspection is that conducting inspections on an individual ("item-per-item") basis is time-consuming and resource-inefficient. The process of handling a single item on a holder and processing the acquired image data for that item introduces delays into the inspection process. In contrast, inspecting items in a batch is much more efficient, allowing for simultaneous evaluation of multiple items at once, for example, ranging from four to eight items - depending on their volume and size. An objective of the present disclosure is to address the efficiency problem associated with mounting a plurality of items with uncertain (*i.e.*, unknown or only partially known) poses onto a single holder. The plurality of items can, for example, include two up to ten items that are mounted together on a single holder - depending on the volume and size of the items.

The present description therefore describes technology for dynamically estimating the pose of a plurality of items, simultaneously and/or sequentially, with a high enough accuracy for the item inspection to be performed reliably, *i.e.,* the pose is iteratively estimated until the parameters of the position and/or orientation of the item are certain up the predetermined accuracy such that the item can be reliably positioned in the correct pose for inspection. This is particularly advantageous for quality inspection, *e.g.* the acquisition and processing times can be limited, such that the projection-based inspection can be performed advantageously fast, e.g. near real-time, in an in-line application for quality control, *e.g.* for defect detection or metrology.

### DESCRIPTION OF THE FIGURES

The following description of the figures relate to specific embodiments of the disclosure which are merely exemplary in nature and not intended to limit the present teachings, their application or uses. Throughout the drawings, the corresponding reference numerals indicate the following parts and features: radiation imaging system (1); source (2); first viewing distance (21); second viewing distance (22); detector (3); projection space (31); projection central axis (32); focal spot (33); item holder (4); holder's central axis (41); holder's longitudinal axis (42); holder's transverse axis (43); item mount (5); mount's central axis (51); item (6); identifier (61); actuator (7); extendable member (71); extendable member (72); moveable member (73); rotatable member (74); actuated gear (75); coupled gear (76); control system (8); landmark (9).
**FIG. 1** shows a radiation imaging system 1 from a top view according to an embodiment of the present disclosure.
**FIG.2** shows a radiation imaging system 1 from a top view according to another embodiment of the present disclosure.
**FIG.3** shows a holder 4 from a side view according to an embodiment wherein the mounted item 6 can be rotated around the item mount's central axis 51.
**FIG.4** shows a holder 4 from a side view according to an embodiment wherein the mounted item 6 can be displaced along the holder's central 41, longitudinal 42 and/or transverse 43 axes.
**FIG.5** shows the holder 4 from a side view according to an embodiment wherein the mounted item 6 can be tilted relative to the projection central axis 32.
**FIG.6** shows the holder 4 from a side view according to an embodiment wherein the item mounts 5 are coupled such that the mounted items 6 can be simultaneously rotated.
**FIG.7** shows a holder 4 comprising a landmark 9 coupled to the holder 4.
**FIG.8** shows a holder 4 comprising a landmark 9 coupled to the mount 5.
**FIG.9** shows an example of a rotational coupling of a plurality of items 6 on an item holder 4.
**FIG.10** shows an example of a projection image acquisition of a plurality of items 6 on an item holder 4 at a first viewing distance 21 and a second viewing distance 22.
**FIG.11** shows another example of a projection image acquisition of a plurality of items 6 on an item holder 4 at a first viewing distance 21 and a second viewing distance 22.
**FIG.12** is a flowchart of method for iteratively refining the pose estimation (PE) error based on a numerical model fitting approach according to an embodiment of the present disclosure.
**FIG.13** is a flowchart of method for further refining the pose estimation (PE) error based on a combination of numerical model fitting and template matching approaches according to an embodiment of the present disclosure.
**FIG.14A** is a projection image of an item at position (A) in **FIG.15****,** corresponding with pose = 90°± 5°.
**FIG.14B** is a projection image of an item at position (B) in **FIG.15****,** corresponding with pose = 180°± 1°.
**FIG.14C** is a projection image of an item at position (C) in **FIG.15****,** corresponding with pose = 180.1°±0.1°.
**FIG.15** shows an example of the numerical model's pose estimation error in function of the pose for the item illustrated in **FIGs.14A-C.**

### DETAILED DESCRIPTION

In the following detailed description, the technology underlying the present disclosure will be described by means of different aspects thereof. It will be readily understood that the aspects of the present disclosure, as generally described herein, and illustrated in the figures, can be arranged, substituted, combined, and designed in a wide variety of different configurations, all of which are explicitly contemplated and make part of this disclosure. This description is meant to aid the reader in understanding the technological concepts more easily, but it is not meant to limit the scope of the present disclosure, which is limited only by the claims.

In the present description, technology is described by means of which the inspection of items using radiation imaging technology can be improved. Specifically, the herein disclosed technology may improve the item inspection speed and accuracy by positioning the inspected item in a pose that is advantageous for the item inspection based on prior knowledge of the item. For example, by focusing the item inspection on a specific regions of interest in which the presence of meteorological defects is expected. Additionally, the herein disclosed technology limits the number of projection images required for inspection, thereby reducing the overall acquisition times of the imaging devices, and also reducing the image data needed to be processed, thereby reducing the processing times of the processing units, e.g. dedicated computer and relevant software.

The technology of the present disclosure can be regarded as "general purpose" item inspection technology in the sense that it can be readily modified for quality inspection of a variety of different items, including for example, different mechanical components for the automotive, aviation, mechanical industry. The skilled person will, hence, appreciate that the present technology is not limited to a specific item shape or material, provided that the item can be inspected by using radiation imaging technology, *i.e.,* image data can be acquired of said item using radiation.

Thus, an approach is disclosed to dynamically estimate an uncertain pose of item, *i.e.,* when a position and/or orientation of the item is a-priori uncertain, *e.g.* only known up to a predetermined accuracy and/or only known for some parameters of the position and/or orientation, while unknown or only known up to a predetermined accuracy for at least one other parameter of the position and/or orientation.

Certain item parameters of the position and/or orientation may be known by mechanically manipulating the item to fit a specific pose or range of possible poses prior to inspection, for example by mounting the item in a specific way or arranging the items in a specific direction or orientation. However, such mechanical manipulation has a limited accuracy, especially when automated, compared to the accuracy required for inspection with a radiation imaging system. For example, a typical item sorting or mounting system can position an item with an accuracy anywhere between e.g. 10° to 1° along the item's rotational axis, but the visual image inspection requires that the item be positioned in a desired pose with a substantially higher accuracy, e.g. 0.1° to 0.01° along the item's rotational axis. Inspection of a mispositioned item might introduce various measurement errors and result in a low reliability for quality control. Present solutions consider verifying the placement of the item, e.g. by individual inspection, or proactively compensating for mispositioning errors by taking a wider range of images, i.e., across a range of different angles. However, both solution substantially increase the inspection and processing times per item and fail to minimise measurement errors still.

Accordingly, the present description describes technology for dynamically estimating the pose of one or more items, simultaneously and/or sequentially, with a high enough accuracy for the item inspection to be performed reliably, *i.e.,* the pose is iteratively estimated until the parameters of the position and/or orientation of the item are certain up the predetermined accuracy such that the item can be reliably positioned in the correct pose for inspection. This is particularly advantageous for quality inspection, e.g. the acquisition and processing times can be limited, such that the projection-based inspection can be performed advantageously fast, *e.g.* near real-time, in an in-line application for quality control, *e.g.* for defect detection or metrology.

Additionally, it should be appreciated that the technology of the present disclosure can be readily modified for dynamically estimating the pose of one or more features of an item and/or landmark. For example, pose estimation of an item with a limited number of structural features, e.g. highly symmetrical items such as spheres or cones, may be difficult because fitting a numerical model onto such an item cannot achieve a high accuracy. However, such an item may still comprise other features for which the pose can be estimated, such as defects or landmarks. Hence, the wording of "item" as used herein may be regarded as applicable to "a feature specific to said item", such as defects or landmarks. Advantageously, knowledge of said feature can then be used to calculate the pose of the item. For example, a defect with a known pose due to known manufacturing errors e.g. impurity and/or assembly.

An overview of various aspects of the technology of the present disclosure is given hereinbelow, after which specific embodiments will be described in more detail. This overview is meant to aid the reader in understanding the technological concepts more quickly, but it is not meant to identify the most important or essential features thereof, nor is it meant to limit the scope of the present disclosure, which is limited only by the claims. When describing specific embodiments, reference is made to the accompanying drawings, which are provided solely to aid in the understanding of the described embodiment.

An aspect of the present disclosure relates to a method for multi-pose inspection of a plurality of items by means of a radiation imaging system, said method comprising the steps of:
- mounting a plurality of items having an uncertain pose on a holder;
- optionally, positioning the plurality of items item on an initial pose, preferably a pose with low certainty;
- estimating a pose for at least one item, preferably the plurality of items, at the first pose;
   wherein said pose estimation comprises
   - acquiring at least one projection image containing the item, preferably the plurality of items,
   - fitting at least one numerical model of a known pose on said image, and
   - calculating a pose estimation error representing said model's fitting accuracy; and,
- iteratively refining the pose estimation for at least one item, preferably the plurality of items by repositioning the plurality of items to a different pose based on the pose estimation error, until the pose estimation error is within an accuracy acceptance criterion for the plurality of items;
- optionally, performing the pose estimation and refinement for the plurality of items, simultaneously and/or sequentially.

Another aspect of the present disclosure relates to computer-implemented method for inspecting a plurality of items with a radiation imaging system, comprising the steps of:
- receiving a projection image containing a plurality of items with an uncertain pose on a holder at a first viewing distance
- estimating a plurality of poses corresponding to the plurality of items; wherein the pose estimation comprises fitting a numerical model to the plurality of items on said image, wherein said numerical model comprises one or more simulations of the item at one or more poses, and calculating a pose estimation error representing fitting accuracy of the numerical model for the plurality of items;
- instructing the radiation imaging system to simultaneously reposition the plurality of items to a different pose based on the pose estimation error;
- receiving a projection image containing a plurality of items at the different pose and iteratively refining the pose estimation until the pose estimation error for the plurality of items is within an accuracy acceptance criterion;
- instructing the radiation imaging system to simultaneously reposition the plurality of items to a second viewing distance that is lower than the first viewing distance used for the pose estimation;
- instructing the radiation imaging system to reposition the plurality of items based the corresponding estimated pose; and,
- receiving a plurality of projection images of the plurality of items at the second viewing distance. Another aspect of the present disclosure relates to a radiation imaging system for multi-pose inspection of a plurality of items, said system comprising:
- a radiation imaging device comprising a radiation source and a detector configured for acquiring a projection image as image data;
- a holder comprising a plurality of mounts for mounting the plurality of items, and an actuator configured for repositioning and/or rotating the plurality of items to a plurality of poses;
- a control system, operatively connected to the imaging device and holder, and configured to
   - estimate a pose for at least one item at a first pose position based on image data acquired by the imaging device; wherein said pose estimation comprises fitting at least one numerical model corresponding with a known pose on said image data, and calculating a pose estimation error representing said model's fitting accuracy; and,
   - iteratively refine the pose estimation by instructing the holder to reposition the plurality of items to a different pose position based on the pose estimation error, until the pose estimation error is within an accuracy acceptance criterion for at least one item, preferably the plurality of items
   - optionally, perform the pose estimation and refinement for the plurality of items, simultaneously and/or sequentially.

Unless otherwise defined, all terms used in describing the technology, including technical and scientific terms, have the meaning as commonly understood by one of ordinary skill in the art to which this disclosure belongs. By means of further guidance, definitions for the terms used in the description are included to better appreciate the teaching of the present disclosure. The terms or definitions used herein are provided solely to aid in the understanding of the technology.

Embodiments of the present disclosure may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic based aspects of the present disclosure may be implemented in software (e.g., instructions stored on non-transitory computer-readable medium) executable by one or more processing units, such as a microprocessor and/or application specific integrated circuits. As such, it should be noted that a plurality of hardware and software-based devices, as well as a plurality of different structural components may be utilized to implement the technology of the present disclosure. For example, "servers" and "computing devices" described in the specification can include one or more processing units, one or more computer-readable medium modules, one or more input/output interfaces, and various connections connecting the components.

As used herein, "radiation imaging technology" refers to imaging techniques using ionizing radiation to view the internal form of an item or object. Practically speaking, the herein discussed technology can be most easily implemented using X-rays and for the sake of brevity parts of the present description will be described with reference to techniques known from X-ray technology. It should nonetheless be appreciated that parts of the herein discussed technology can be implemented using similar ionizing radiation and non-ionizing radiation.

To create an image using radiation imaging technology, a beam of radiation is produced by a radiation source and is projected toward an item or object. A certain amount of the radiation is absorbed by the object, dependent on the object's density and structural composition. The radiation that passes through the item is captured by a detector positioned behind said item. Accordingly, a "radiation imaging device" as used herein refers to the combination of a radiation source and detector, and the space between the source and detector in which an object can be positioned to acquire an image is defined as the "projection space". The dimensions of the projection space can be adjusted by changing various parameters of the radiation imaging device.

Information regarding the item's interaction with the radiation beam is collated and subjected to computation to generate a flat two-dimensional (2D) "projection image". The item can, for example attenuate the radiation beam's intensity (e.g. standard X-ray imaging), diffract the beam into many specific directions (e.g. X-ray crystallography), change the phase (e.g. phase-contrast X-ray imaging), and so on. By combining image data from a plurality of projection images a "reconstruction image" can be reconstructed using an image reconstruction technique known in the art. Further, by combining image data from a plurality of different viewing planes a partial (2.5D) or full three-dimensional (3D) "volumetric reconstruction image" can be constructed. The projection image and/or reconstruction image can be analysed using an image processing technique to determine information about an object captured in said image, for example to classify the object or advantageously identify it.

As used herein, a "pose" of an item refers the position and orientation of said item as characterised by its spatial parameters. Accordingly, the herein described technology aims to determine the uncertain pose of the item, i.e., at least one spatial parameter of the item is unknown or only known up to an accuracy which does not meet the accuracy criterion for inspection. In an embodiment, the spatial parameter may include the item's orientation, position and/or tilt, relative to a reference, typically the imaging device. Advantageously dimensional and/or material information about the item, such as the dimensions, composition, shape, volume, density etc., is known beforehand in order to generate an appropriate numerical model for fitting. In an embodiment at least one spatial parameter may be partially known based on prior knowledge of the provided pose, *i.e.,* the pose in which the item provided to the imaging system e.g., by positioning or mounting the item in a specific way, but with an accuracy which is too low for the accuracy criterion for inspection.

Accordingly, "repositioning" of an item as used herein refers to changing the pose of said item, specifically changing of at least one spatial parameter, preferably including a change in the item's orientation, position and/or tilt. In an embodiment, repositioning of the item may include rotating the item to a different orientation or viewing angle *(e.g.* rotational angle α), moving its position *(e.g.* x,y,z-coordinates), and/or tilting (*e.g*. tilt angle θ), relative to a reference, typically the imaging device.

It is understood that the pose of the item is advantageously defined in relation to the radiation imaging device, specifically corresponding with the pose of the item within the projection space. The item pose can therefore be regarded as a relative pose, *i.e.,* the pose is defined relative to the position and orientation of radiation imaging device, and, as such, can be adjusted by any movement of the item and/or the imaging device, relative to each other. However, for the sake of simplicity, only movement of the item will be described in the present description because such movement is typically less complex and therefore more economic. Nonetheless, it understood that repositioning of the item may include a repositioning of the radiation imaging device, e.g., to adjust the viewing angle or zoom level, and such embodiments are also anticipated herein.

As used herein, "numerical model" refers to any solid model (virtual) representation, *e.g.* solid model representation in a computer, of the item, which may comprise one or more components of which the item is assembled. Advantageously the numerical model is a three-dimensional (3D) model, but a two-dimensional (2D) model can also be used, or a 2D model may be projected on based a 3D model in order to improve computing efficiency. The numerical model may virtually represent the item, and its components if applicable, as a volume mesh, as a polygon mesh with implicit volume definition, via a collection of surfaces or curves to represent the item's boundaries, or as a constructive solid geometry (CSG modelling). The numerical model may further comprise a statistical shape model describing the shape of the item and/or of its components. For example, the numerical model may be a parametric model which parametrizes the item shape boundary via parametric curves and/or surfaces, or via parametrized mesh deformations. Advantageously, the model may comprise material property data in relation to the volume of the virtually represented item. The material property data may be representative of matter-radiation interactions of the constituent materials of the model, e.g. included in the model, as metadata attached to the model or as a separate data structure indexing the components of the modelled item. Other data may be associated with the virtual representation, for instance expected or statistically estimated manufacturing tolerances of dimension, angles, etc.

In an embodiment the numerical model may correspond to a computer-aided design (CAD) model, *e.g.* used in designing and/or manufacturing the item. CAD model is a virtual model representation of the item or of an assembly of components from which the item is built. For instance, the CAD model is an assembly model which comprises one or more components of the item as assembly parts together with their geometrical or mechanical interrelations and constraints. For example, the CAD model may take variations in alignment and/or orientation of a plurality of components with respect to each other into account.

As used herein, a "defect" of an item refers to any deviations from a reference item that is advantageously devoid of defects, or alternatively contains defects within an acceptable quality level. For example, defects may comprise defective, damaged, contaminated and/or missing parts of the item or any components thereof. A defect may be characterised by means of a spatial parameter, which may include e.g. cartesian coordinates (*e.g.* x,y,z)), orientation (*e.g.* ϕ)), and/or geometry (*e.g.* shape, length, or radius. Also, the defect may be identified based its type or origin, for example, as an impurity, functional or structural defect, assembly error, and so on. Additionally, a plurality of defects may be jointly characterised by an appearance parameter, such as their relative or absolute numbers, frequency, grouping, clustering (*e.g*. histogram appearance), etc. It should be appreciated that a combination of parameters allows for more accurate characterization of the defects and item, *e.g.* for generating a defect report.

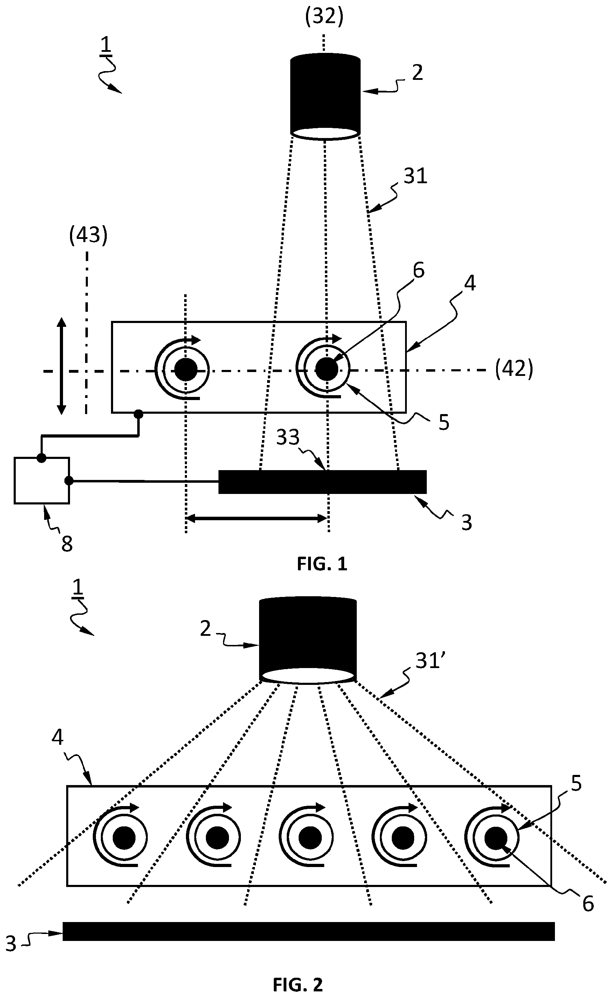

The radiation imaging system 1 of the present disclosure will be discussed in more detail with reference to **Figure 1**, which schematically shows the main components of a radiation imaging device which includes radiation source 2 and detector 3. As described above, projection space 31 is formed between said source 2 and detector 3 such that when item 6 is positioned in projection space 31, a projection image can be acquired thereof. Advantageously, item 6 is placed along axis 32, running centrally through source 2 and perpendicular to the detector 3, referred to hereinbelow as the projection central axis 32. The position at which the projection central axis 32 hits the detector forms focal spot 33. Placement of item 6 at focal spot 33 typically provides the most accurate image, which is advantageous for realising higher accuracy of item inspection.

As further shown, the radiation imaging system 1 further comprises item holder 4 configured for holding a plurality of items 6. Specifically, holder 4 comprises a plurality of item mounts 5, each mount 5 being configured for mounting at least one item 6. Advantageously, mount 5 is configured for mounting item 6 in a specific pose 6.The mount 5 may, for example, be a puck or a clamp with a shape that accommodates the unique geometry of item 6 in order to realise a secure mounting, *e.g.* limiting undesired item movement e.g. during holder movement. Advantageously the mount is configured to mechanically position the item in a specific range of possible poses such that the item pose is partially known beforehand.

In an embodiment the mount is configured to rotate a mounted item along its central axis. Rotation of the mounted item allows for changing the item's pose relative to its mounted pose, *i.e.,* the pose as initially mounted, such that its pose can be estimated according to an embodiment of the imaging system 1. Alternatively, the item may be positioned to an initial pose based on prior knowledge of the mounted pose, i.e., the pose of the item as mounted. Specifically, prior knowledge of the mounted pose, for example by mechanically positioning the item in a specific range of possible poses, the item may be pre-positioned advantageous to the pose estimation, as will be discussed further below.

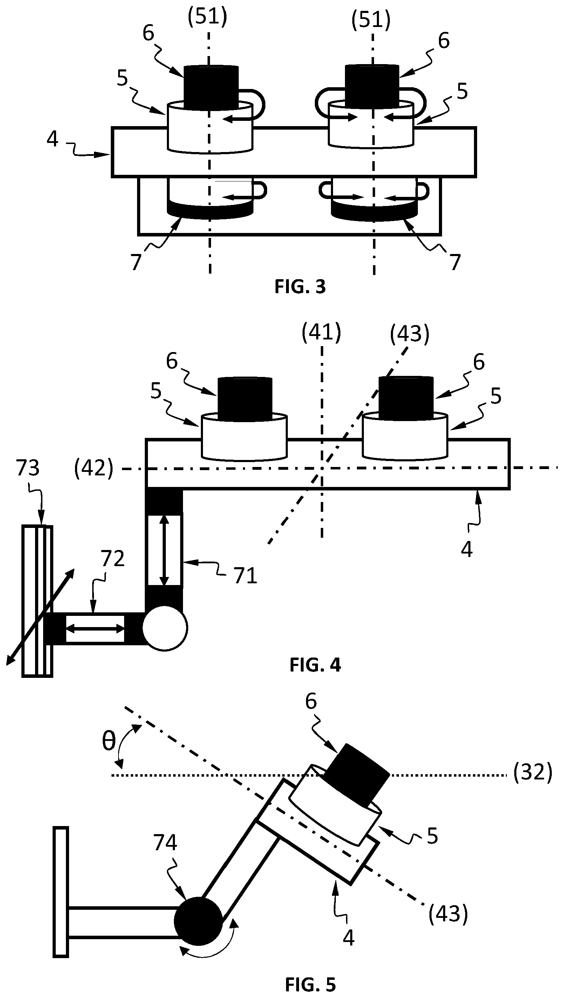

An embodiment of the system's item rotation mechanics is illustrated in **Figure 3****,** which shows actuator 7 coupled to at least one item mount 5. The actuator 7 is configured to rotate said item in at least one direction, clockwise or counterclockwise - shown in the embodiment on the left side of **Figure 3****.** Advantageously the actuator 7 is configured to freely rotate the item in any direction, *i.e.,* clockwise and counterclockwise - shown in the embodiment on the right side of **Figure 3****.** In an embodiment the actuator 7 may rotate the item mount 5 such that its mounted item 6 is jointly rotated. Alternatively the actuator may be configured to rotate the mounted item 6 within the item mount 5. The actuator may comprise any type of actuator, for example a rotary actuator, but preferably an electric actuator is implemented because it allows for more accurate control and tracking of a rotational movement.

Referring back to **Figure 1****,** the holder 4 is shown to be moveable in a first direction, specifically along the holder's longitudinal axis 42, continuously or in steps. By moving holder 4 along its longitudinal axis 42 -indicated with a double-sided arrow- another item 6 can be placed in focal spot 33 should a more accurate projection image be required. Alternatively or additionally, the imaging system may be configured to move the source and/or detector with respect to the item in order to change the position of the focal spot. However, the provision of a moveable holder is mechanically less complex and therefore more economic. The same embodiment can be extended to greater number of items arranged in a sequence along the same longitudinal axis 42. Specifically, by moving holder 4 along this longitudinal axis 42, each item 6 can be sequentially placed in the focal spot 33 in order to acquire a sequence of projection images, each image containing at least one item.

In an embodiment the radiation source 2 may be configured to acquire at least one image containing a plurality of items. The acquired image can be split into plurality of projection images for the plurality of items 6, each split projection image advantageously corresponding with a different projection space 31'. Referring now to **Figure 2****,** an embodiment is illustrated where a total of five projection spaces 31' is shown to overlap with five adjacently mounted items 6. This way the time for acquiring a projection image can be reduced by a factor of 5 compared to the embodiment previously discussed with reference to **Figure 1****,** wherein each item needs to be moved into the focal spot 33. The skilled person understand that the time reduction is dependent on the number of items contained in the image, for example a factor of 2 for 2 items, 3 for 3 items, and so on. Alternatively, at least one image containing at least a portion, e.g. two or more, of the plurality of items may be acquired, for instance if there are too many mounted items to contain in the image. The partial image may then similarly be split up into a plurality of projection image, depending on the number of items.

As further shown in **Figure 1****,** the holder 4 may be moveable in a second direction, along the holder's transverse axis 43, continuously or in steps. By moving the holder 4 along its transverse axis 43 the zoom level of the projection image can be adjusted. Specifically, in the lowest zoom level the distance between the source 2 and item 6 is highest. Accordingly, by moving the holder 4 towards the source 2, the distance between the source 2 and item 6 can be decreased, thereby increasing the zoom level. Alternatively, the system 1 may be configured to move the source 2 and detector 3 with respect to the item 6 in order to change the zoom level. However, the provision of a moveable holder 4 is mechanically less complex.

In an embodiment the holder 4 may be moveable in a third direction, along the holder's central axis 41, continuously or in steps. By moving the holder 4 along its central axis 41, the height of the item can be adjusted. This is advantageous because the dimensions of the mounted items 6 might vary and advantageously each item's centre is aligned with the imaging device's central axis. Additionally, inspection of a specific region of interest in high zoom levels may require adjusting the item's height such that said region is aligned with the imaging device's central axis.

An embodiment of the above-described holder's movement mechanics is illustrated in **Figure 4****,** which shows actuator 7 comprising three moveable components coupled to the holder 4, each actuator component being moveably arranged in two opposite directions to achieve three degrees of freedom for the holder 4 in order to displace a mounted item 6. Specifically, first extendable member 71 connects to holder 4 at one end and at another end connects to second extendable member 72, arranged perpendicular thereto. Movement of these two extendable members, concurrently or independently, along a specific direction -indicated with a double-sided arrow- allows for repositioning the holder 4 in at least two directions, specifically along the holder's central 41 and longitudinal axes 42. Additionally, second member 72 is coupled to a moveable member 72 configured to move the holder 4 in a third direction, specifically along the holder's transverse axis 43. The moveable member 73 may for example comprise a rail along which the holder 4 can be moved. The skilled person understands that the shown embodiment is for illustrative purposes only and does not represent a practical implementation of such movement control, since the same actuation can be achieved using a combination of various actuators known in the art. The actuator may comprise any type of actuator, for example a linear actuator, but preferably an electric actuator is implemented because it provides for more accurate control of linear movements. In a preferred embodiment the actuator may comprise a robotic arm configured to couple with the holder.

In an embodiment the holder 4 and/or item mount 5 may be tilted relative to the projection central axis 32 such that the item's tilt can be adjusted should a different viewing angle and/or zoom level be required. An embodiment of the holder's tilt mechanics is illustrated in **Figure 5****,** which shows actuator 7 comprising rotatable member 74 coupled to two moveably arranged supporting members, whereby a rotating motion of said rotatable member 74 rotates said two supporting members towards or away from each other -indicated with a double-sided arrow- such that holder 4 coupled to an end of one of the supporting members can be tilted towards or away from the radiation device, respectively. The tilt can be measured as a function of the tilt angle θ between the holder's transverse axis 43 and the projection central axis 32. Under normal operation the tilt angle θ is 0°, i.e., the holder's transverse axis 43 is aligned with the projection central axis 32.In an embodiment the plurality of item mounts is rotationally coupled such that at least two items, preferably the plurality of items rotate simultaneously, *i.e.,* at the same time. Preferably the holder comprises a plurality of meshing gears, for example having a teethed or rimmed surface that interconnects with an adjacent gear, such that movement of one gear concurrently rotates any interconnected gear. The mounts may be rotationally coupled such that they rotate in the same directions, for example clockwise, or alternatively in opposite directions, for example clockwise and counterclockwise, depending on the configuration of the rotational coupling. Mechanically coupling the item rotation can reduce the complexity of the holder, specifically the actuator, in order to prevent the occurrence of errors in repositioning because for complex item inspection the repositioning needs be very accurate, e.g. to 0.01 deg. From a mechanical perspective rotating the plurality of items from a single or limited number of actuators allows for more accurate control off the repositioning without having to synchronise a large number of actuators.

In an embodiment the plurality of item mounts is rotationally coupled such that at least two items, preferably the plurality of items rotate equally, i.e., in the same manner or to the same extent. For example, rotation of one item by 1° equally rotates another item by 1°, clockwise and counterclockwise.

Equal rotational coupling allows the items' poses to become interdependent. Knowledge of the pose interdependency may improve the numerical model's fitting speed and/or accuracy by considering the model's fitting on items with e.g. lower pose estimation error. Such an embodiment may be particularly advantageous when a sequence of projection images is acquired, as shown in **Figure 1****.**

In another embodiment the plurality of item mounts is rotationally coupled such that at least two items, preferably the plurality of items rotate equivalently, i.e., in a similar manner or to a similar extent relative to an imaging device. Preferably the items are rotated equivalently such that deviations in the imaging device's viewing angles are compensated. For example, rotation of a central item by 5° equivalently rotates a neighbouring item by 4.9° or 5.1°, depending on the direction and position, such that their rotations appear equal to an imaging device aligned with the central item. Advantageously, the further an item is displaced from the projection central axis, the larger the rotational deviation. Such an embodiment may be particularly advantageous when a single image containing a plurality of items is acquired, as shown in **Figure 2****,** because equal rotation of adjacent items could break their pose interdependency and/or increase processing difficulty of the image data (i.e., to calculate the equivalent rotational post-acquisition).

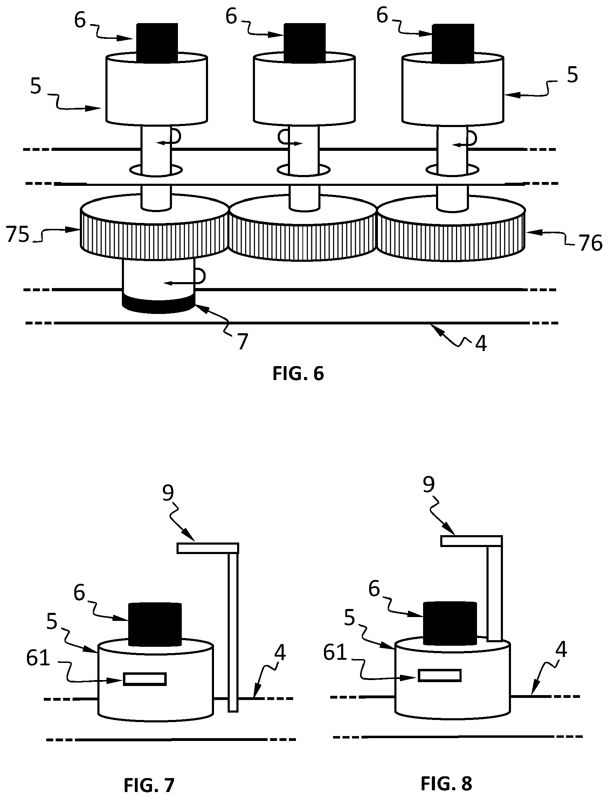

An embodiment of the above-described mount's rotational coupling is illustrated in **Figure 6****,** which shows a plurality of items 6 mounted on a plurality of item mounts 5, one item 6 per mount 5. At least one item mount 5 may comprise an upper part configured for mounting of item 6, and a lower part configured for coupling with actuator 7 or any component thereof. For example, the lower part may be an elongated shaft that passes through an opening in the holder such that an item mounted on the upper side of holder 4 can be coupled with an actuator 7 arranged inside said holder 4.

As further shown, actuator 7 comprises a plurality of meshing gears, one gear per mount 5, of which at least one gear 75 is coupled to rotary actuator 7 configured to actuate said gear 75. Because all the meshing gears are arranged in a sequence, rotation of actuated gear 75 with rotary actuator 7 will actuate the plurality of coupled gears 76, which in turn will simultaneously rotate every mount 5 coupled thereto.

In the shown embodiment the rotational direction is alternated, i.e., the rotation of each mount will alternate between clockwise and counterclockwise directions. However, the skilled person understands that the rotational direction can be adjusted, for example by placing an additional gear between two adjacent gears their rotational directions can be synchronised in the same direction e.g. clockwise or counterclockwise.

In the shown embodiment the mount will rotate equally because the gears have the same dimensions / meshes. However, the skilled person understands that the relative rotational amplitude can be adjusted by e.g. changing the relative gear dimensions / meshes to realise an inequal rotation, specifically, by considering deviations in the imaging device's viewing angle in order to obtain an equivalent rotation of items.

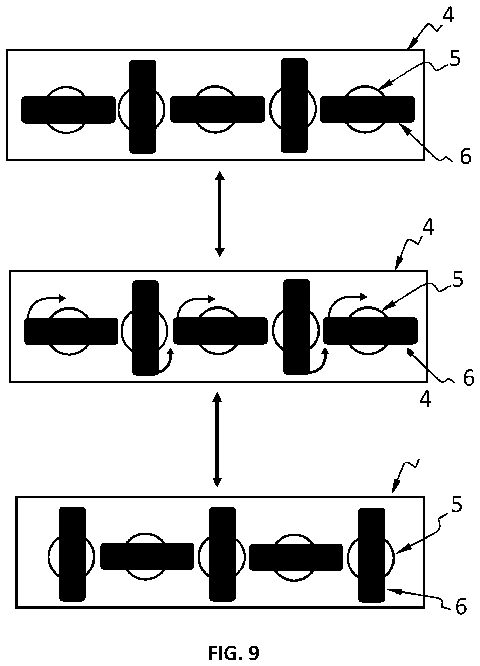

Another embodiment of rotational coupling is shown in **Figure 9****,** which depicts an item holder 4 and a plurality of items 6 is mounted on the holder, with dimensions extending outside the corresponding item mounts 5. For instance, this embodiment addresses a scenario where the width of an item is larger than its length, potentially leading to collisions between adjacently mounted items during independent rotation. In the depicted embodiment, the items 6 are alternately mounted along their width and length direction. Subsequently, simultaneous rotation can be coupled in such a way that adjacent items rotate in different directions: clockwise and counterclockwise. This arrangement may help to prevent collision that could damage one or more items.

In an embodiment, the rotational coupling may include repositioning the plurality of items based on a collision factor that is calculated based on one or more dimensions of the items or segmented regions of interest of measured values. For example, the length and width of two adjacently mounted items may be considered to adapt one or more parameters relevant to the item repositioning.

Referring again to **Figure 1****,** it is shown that the system 1 further comprises a control system 8, which is coupled to imaging device 3 in order to receive image data therefrom - indicated by the solid line with bullet endings. It is understood that the shown electrical connection is for illustrative purposes only and other connections such as a wireless could also be implemented. Advantageously, the control system 8 not only receives image data from the imaging device 3, but is also configured to process it in accordance with one or more embodiments described in the present description.

The skilled person understands that although the present control system 8 is described as a single unit for simplicity, but in practical implementation, the control system may comprise a plurality of processing units configured for performing a specific task(s) independently of each other, but are nonetheless interconnected in a way that they can collectively perform the designated function of the herein described control system.

Preliminary analysis by the control system of the acquired image data, hereinafter referred to as "estimation image data", may allow for estimating an uncertain pose of the real item by fitting a numerical model corresponding with a virtual item which has a known pose. Should a perfect fit of the numerical model on the estimation image data be possible, the control system would be able to determine the pose of the item with absolute accuracy, i.e., without error.

In practise, however, a large number of variations in alignment and/or orientation of the item need to be considered such that the numerical model effectively can only approximate the real item's pose, i.e., up to certain accuracy. If the model does not accurately fit the estimation image data, the outcomes it produces will be inadequate for detailed inspection of the item, e.g., defect detection, based on the inaccuracy of the estimated pose. The control system should therefore consider the model's fitting accuracy, which can be represented as a pose estimation error of the fitted model. Hence, by repeating the pose estimation process for a plurality of uncertain item poses, the pose estimation error can be iteratively reduced until the model fitting is sufficiently accurate for the detailed inspection. An estimated pose with a pose estimation error that falls within an acceptance criterion that is acceptable for the detailed inspection is hereinafter referred as a certain pose. The skilled person appreciates that the acceptance criterion is both item and inspection specific; specific items or inspections may require a higher accuracy of pose estimation than others.

Accordingly, the control system is configured to perform an iterative optimization in which a more accurate estimate of the pose is obtained by repositioning the item a different pose, and re-evaluating the accuracy of the pose estimation until a suitable pose estimation is reached, *i.e.* the pose estimation error reaches an acceptance criterion that is acceptable for the detailed inspection. It is therefore advantageous that the control system is operatively connected to the holder such that it can control the item repositioning, directly or indirectly, based on the accuracy of the current pose estimation. As shown in **Figure 1****,** the same control system 8 is coupled to holder 4 in order to steer the controllable holder 4 to reposition the item - indicated by the solid line with bullet endings. It is understood that the shown electrical connection is for illustrative purposes only, since the control system 8 may also be coupled to any of the holder's components, such as the above-described item mounts 5 and/or actuators 7, or other units controlling the actuation of said components.

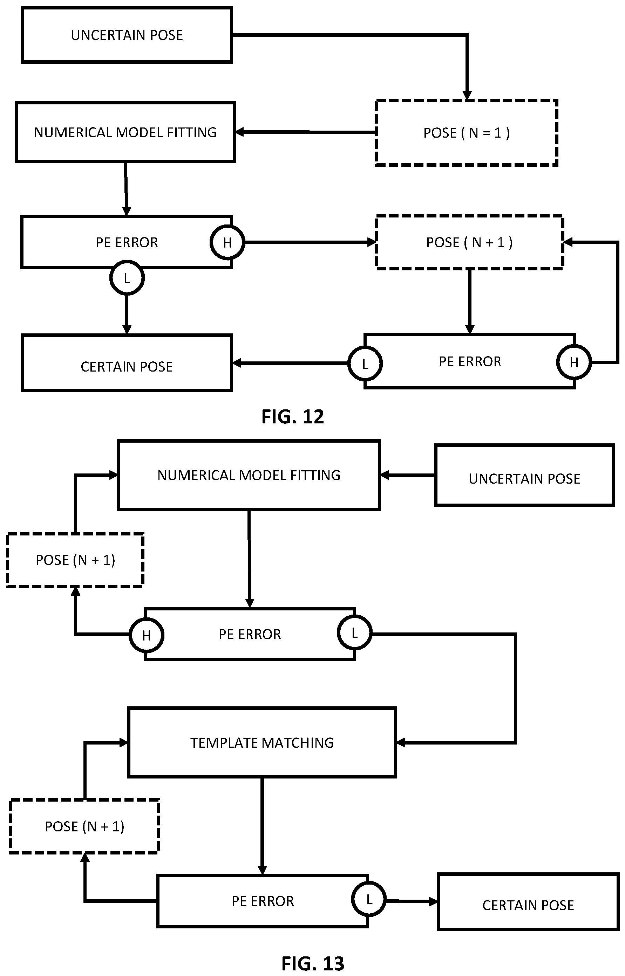

An embodiment of the iterative pose optimization of the present disclosure will be discussed in more detail with reference to **Figure 12****,** which shows a flowchart of a method for iteratively refining the pose estimation (PE) error based on a numerical model fitting approach. This numerical model fitting approach may be implemented by the control system of the above-discussed radiation imaging system. As shown in **Figure 12****,** firstly an item having an uncertain pose N is provided to the system. The uncertain pose may, for example, correspond with a mounted pose, i.e., pose of the item as mounted, or an initial pose, i.e., pose of the item as initially positioned by the system, e.g. with low accuracy. The uncertain pose herein corresponds with N = 1, since it is the first pose that will be estimated based on a first acquisition image or a plurality of first acquisition images.

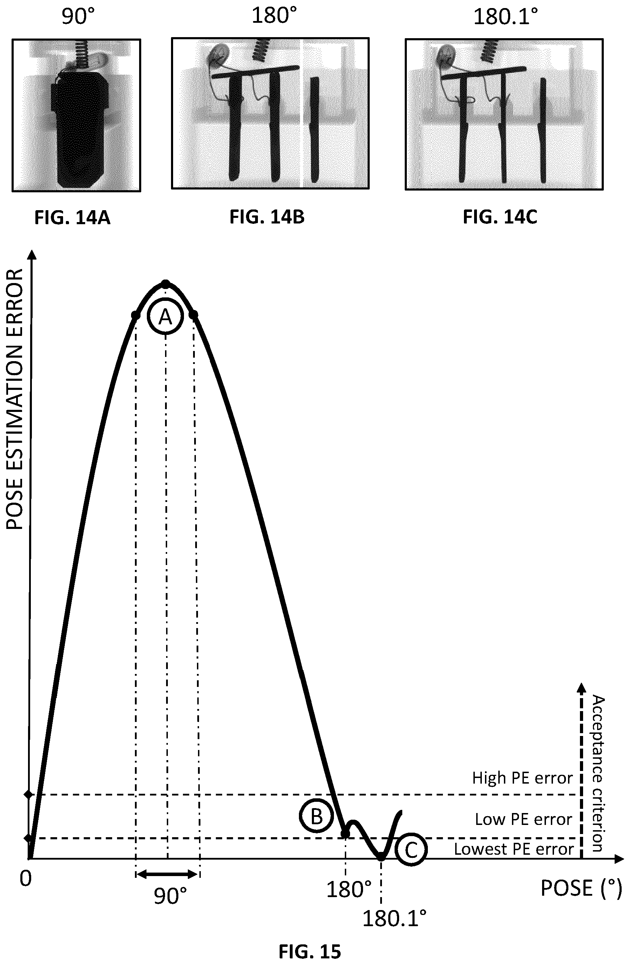

**Figure 12** further shows that the uncertain pose is estimated by fitting a numerical model of a known pose on said image and calculating a PE error representing said model's fitting accuracy. The fitting accuracy may be dependent, for example, on the position and/or orientation of the item. To better explain the fitting accuracy, an exemplary embodiment will be discussed with reference to **Figures 14A and 14B****,** which show projection images acquired of a flat, e.g. disc-shaped, item. When fitting a model onto such a flat item, its orientation can be relatively accurately estimated from a side view **(****Figure 14B****),** in which minor adjustments to the viewing angle are noticeable, but it is more difficult from a front / rear view **(****Figure 14A****),** which are very similar in appearance and hence require larger angular adjustments. It may be appreciated that, because of the X-rays passing through the item, the opposite side views and the front / rear views will result in mirrored images.

The numerical model's trained pose estimation error (relative values) for the item of **Figures 14A and 14B** can be plotted in function of the pose (°) to obtain **Figure 15****.** Continuing with the example of the disc-shaped item, since the item's orientation is difficult to estimate from a front / rear view, a high pose estimation (PE) error may be expected when fitting a model on **Figure 14A****.** Accordingly, the PE error for **Figure 14A** will corresponds with position (A) at the top of the first, left-most error peak in the illustrated plot of **Figure 15****.** The high PE error herein represents a low fitting accuracy of the numerical model. In the present example the pose of the item in **Figure 14A** may be estimated as a pose of 90°. However, since the PE peak is so broad, the real pose of the item can be anywhere in the range of approximately 85° to 95°, resulting a numerical model fitting accuracy of [± 5°]. Such a PE error may be regarded as a high PE error and the pose estimation should be refined.

Referring back to **Figure 12****,** it is shown that the pose estimation error may be regarded as a high (H) or low (L) in comparison to e.g. a threshold value, defined as the acceptance criterion for the model's fitting accuracy. In the illustrated embodiment, a low PE error indicates that the model's fitting accuracy is within the accuracy acceptance criterion and hence the estimated pose may be regarded as certain, at least for the intended purpose of item inspection, such as defect analysis. Equivalently, a high PE error indicates that the model's fitting accuracy is outside the accuracy acceptance criterion and hence the estimated pose remains uncertain still. Accordingly, for a high PE error the pose estimation may be refined by iteratively repositioning the item to another pose, N +1, each time estimating a pose with a new PE error, until a low PE error is obtained, and the item pose can be regarded as certain.

Referring yet again to the example of the disc-shaped item, since the item's orientation can be more accurately estimated from side view, a low pose estimation (PE) error can be expected when fitting a model on **Figure 14B****.** Accordingly, the PE error for **Figure 14B** will correspond with position (B) at the bottom of the peak in the illustrated plot of **Figure 15****.** The low PE error herein represents a high fitting accuracy of the numerical model. In the present example the pose of the item in **Figure 14B** may be estimated as a pose of 180°. Because the PE peak is narrower, the real pose of the item can now range from approximately 179° to 181°, resulting a numerical model fitting accuracy of [± 1°]. Such a PE error may be regarded as a low error if it is acceptable for the item inspection.

In some embodiments, the numerical model comprises one or more simulations that represent the item at different poses. These simulations can be obtained from a library that contains a variety of precomputed projection images. These images are based on precomputed poses of a numerical model that virtually represents the item. Alternatively, the simulations may be computed during the pose estimation process using the acquired projection image.

In some embodiments, the simulations can be computed by projecting rays virtually representing radiation from a simulated radiation source through the numerical model that virtually represents the item onto a simulated image detector. By varying one or more geometric parameters of the numerical model and/or the radiation imaging system, one or more simulations representing different poses of the numerical model can be obtained.

Another embodiment of the iterative pose optimization of the present disclosure will be discussed in more detail with reference to **Figure 13****,** which shows a flowchart of a method for iteratively refining the pose estimation (PE) error based on based on a combination of a numerical model fitting and template matching approach. The combined numerical model fitting and template matching approaches may be implemented by the control system of the above-discussed radiation imaging system.

Analogous to **Figure 12****,** the item's uncertain pose is estimated by fitting a numerical model of a known pose on said image and calculating a PE error representing said model's fitting accuracy. The pose estimation may be iteratively refined by repositioning the item to another pose, N +1, until a low PE error is obtained. However, for certain models even the most accurate fitting may be still too low for the item inspection. In other words, even a low PE error, e.g. with a fitting accuracy of [± 1°] as exemplary calculated in **Figure 15****,** may be unacceptable to consider the estimated pose as a certain. In such embodiment the pose estimation can be refined further still by applying a template matching approach advantageously after the numerical model fitting.

To better explain the template matching approach, the above-discussed exemplary embodiment of a disc-shaped item will be discussed further with reference to **Figures 14B and 14C****,** which show projection images acquired from two adjacent side view. Specifically, **Figure 15** shows that the numerical model fitted onto **Figure 14B** - corresponding with position B- has fitting accuracy of ± 1° and corresponds with an estimated pose of 180°. Because this is the highest fitting accuracy of the model, the PE error can be regarded as low. However, as shown in **Figure 14C****,** there actual pose can be refined further still by ± 0.1°.

In order to obtain a higher PE error accuracy, the acquired projection image of **Figure 14B** can be matched with a plurality of references in a plurality of known poses, advantageously adjacent to the estimated pose. For example, the projection image of the item can be matched with 11 previously acquired images of a reference item and/or simulations thereof, each reference corresponding with a rotation of 0.1° for the reference item, i.e., from 179.5°-180.5°. The pose of the item can be refined based on the highest image matching accuracy between the acquired projection image(s) and the reference images. In the example of **Figure 15****,** the highest image matching accuracy is obtained for an image corresponding with 180.1°. Hence, the template matching increases the fitting accuracy to a PE error of ± 0.1; i.e., it is the lowest PE error.

Referring back to **Figure 13** it is shown that the template matching approach may also be performed iteratively, for example if the image matching accuracy is not accurate enough or simply for redundancy, i.e., confirming the best matching. Specifically, the iterative loop may comprise repositioning the item to a pose corresponding with the reference for which the highest image matching accuracy is obtained, N = match, acquiring another projection image at said pose and comparing said projection image with another set of references. This may be particularly advantageous if the image is matched with a limited number of references. Once an image matching accuracy is reached with the lowest PE error, for example by image matching the same pose twice, the item pose can be regarded as certain.

In order to realise the iterative optimization of the pose estimation, the control system may be configured to employ various image processing techniques known in the art e.g. to process and analyse image data. Hereinunder various embodiments of the control system will be described aimed at realising the above-described pose estimation functionality of the control system, but the present disclosure is not limited thereto since alternative or newer image processing techniques can be easily implemented in order to improve the overall efficiency of the system. Moreover, some of the described embodiments make use of a machine learning (ML) algorithm or models generated by ML algorithms, such a ML-generated map or classification. The application of an ML algorithm is regarded as particularly suitable for automated image data analysis in a high throughput quality inspection environment whilst still ensuring high accuracy. The skilled person is, however, aware of techniques in the art for improving the accuracy and efficiency of an ML algorithm, such as retraining or adjusting classifier values based on expert review.

In an embodiment the pose estimation is refined by pose coupling, whereby at least two items, preferably the plurality of items are bound such that a change in pose of one of the items will cause a change in all of the pose coupled items. The pose coupling may be realised by simultaneously repositioning the plurality of items to a different pose based on the pose estimation error, until the pose estimation error is within an acceptance criterion for the plurality of items. The plurality of items is repositioned simultaneously, i.e., at the same time, to a different pose such that the pose estimation for the plurality of items can be sped up by decreasing the individual cycle times.

In an embodiment the pose estimation is refined by equal pose coupling, whereby at least two items, preferably the plurality of items are equally repositioned to a different pose based on the pose estimation error. As used herein, "equal repositioning" refers to a repositioning of the items in the same manner or to the same extent, which in the present context refers to the value of *e.g.* the rotational angle α, tilt angle θ, and/or displacement along the x,y,z-axes. For example, rotation of one item by 1° equally rotates another item by 1°, clockwise or counterclockwise.

In an embodiment the pose estimation is refined by equivalent pose coupling, whereby at least two items, preferably the plurality of items are equivalently repositioned to a different pose based on the pose estimation error and/or the viewing angle of a radiation imaging device acquiring the projection image. As used herein, "equivalent repositioning" refers to repositioning the items in a comparable manner or to a similar extent relative to an imaging device. Preferably the items are rotated equivalently such that deviations in the imaging device's viewing angles are compensated. For example, rotation of a central item by 5° equivalently rotates a neighbouring item by 4.9° or 5.1°, depending on the direction and position, such that their rotations appear equal to an imaging device aligned with the central item. The presence of pose coupling, preferably equal / equivalent pose coupling, may allow for improving the pose refinement process by applying the knowledge of pose coupled items to improve the numerical model's fitting speed and/or accuracy by considering the poses of the item relative to each other and any adjustments thereto, to improve the numerical models' fitting accuracy. Advantageously, the pose refinement for pose estimation with a higher pose estimation error are refined based on the pose estimation of an item with a lower pose estimation error. This way the number and/or magnitude of iterative pose refinement steps to reach a sufficiently accurate pose estimation can be minimised. Additionally, this can improve the time required for full pose estimation time per holder, i.e., for all items.

In some embodiments, prior or partial knowledge of the items can be utilized to enhance the pose estimation process by applying knowledge of the pose coupling into the numerical fitting accuracy. The pose coupling can be implemented assuming that the pose of the plurality of items is partially known at the first viewing distance (low zoom). The zoom pose estimation of the item that could be determined most accurately (with the smallest deviation from the target pose) can then also be used as an additional correction factor for the (re)positioning of at least one other item of the plurality of items (with a larger deviation from the target pose) compared to what can be determined based on the pose information available in the projection image alone. In this way, for example, a combination of information determined based on a plurality of projection images acquired at a plurality of viewing distances (high zoom and low zoom) can be used to further enhance the pose estimation and item inspection process.

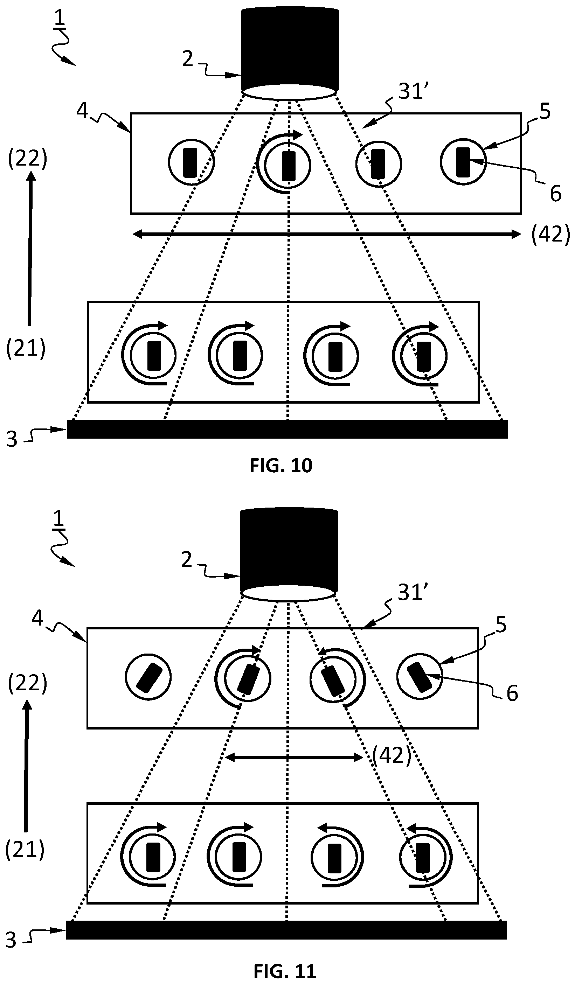

In some embodiments, prior or partial knowledge of a landmark assigned to one or more items can be utilized to enhance the pose estimation process by applying knowledge of how the items is mounted into the numerical fitting accuracy. For instance, a landmark implemented on the holder, as described in embodiments discussed in reference to **Figures 9** or **10****,** can be employed to serve as a reference when applying the numerical model onto the projection image to improve the accuracy of pose estimation. The same landmark can then serve as another reference point when applying the numerical model after the simultaneous rotation of the plurality of items, for example, to verify the degree of rotation of the items. Alternatively or in combination, adjacent items mounted on the holder and/or items captured within a single projection image can also serve as reference points when applying the numerical model after the simultaneous rotation of the plurality of items. In an embodiment the pose estimation of at least one item may be refined based on the pose estimation of another item with a coupled pose. Advantageously the other item is positioned or mounted adjacent to the item for which the pose estimation is refined. Hence, the pose is estimated for at least two, preferably adjacently mounted, items. The numerical model's fitting accuracy may be increasing by including information of the pose interdependency, such as the angular information, to improve the pose estimation. This embodiment therefore combines the available information from a plurality of subsequent image analyses to increase the accuracy that goes beyond the numerical model's accuracy for improve the accuracy

In an embodiment the pose estimation of at least one item may be refined based on the pose estimation of a plurality of pose estimations of another item with a coupled pose. The provision of additional pose estimation data allows for further refining the model's fitting accuracy. This can be particularly beneficial when estimating the pose of items which require multiple iterations. By comparing how the pose coupled items were repositioned a sufficiently accurate pose estimation can be reached faster such that the total number of pose refinement steps can be effectively reduced.

In an embodiment the numerical model is calculated based on the viewing angle of the imaging device relative to the plurality of split images. Advantageously, knowledge of the equal and/or equivalent rotation of items can be considered when selecting the appropriate numerical model to speed up the image processing once the pose interdependency is determined. Also the pose estimation accuracy can be improved by selecting a more appropriate model.

In an embodiment the pose is estimated by acquiring at least one projection image containing the plurality of items, and preferably splitting up said projection image for at least one item of the plurality of items. Preferably the projection image containing the plurality of items is split into a plurality of projection images for the plurality of items. This has the advantage of reducing the processing time, since fewer projection images need to be acquired. It is understood that the possibility to acquire a projection image containing more than one item is dependent on the radiation device's configuration, such as the opening angle or zoom level.

This embodiment takes advantage of the fact that the item pose can be estimated on image data of lower quality, *e.g.* lower zoom, when compared to the image quality required for detailed analysis, *e.g.* high zoom. Accordingly, this provides the possibility of estimating the pose of a plurality of items in a single or limited number of images which can be estimated by fitting a plurality of models on said image, or advantageously splitting said image into a plurality of smaller images and fitting a plurality of models on said plurality of split images. For example, for a holder holding five items, the cycle can be reduced by a factor of five compared to acquiring five separate projection images. The skilled person understand that the time reduction is dependent on the number of items contained in the image, for example a factor of two for two items, three for three items, and so on.

In an embodiment the pose for at least one item may be estimated by calculating a pose, preferably with a pose estimation error within an accuracy acceptance criterion, based on at least two pose estimations of the same item at different positions. In such embodiment knowledge of the repositioning magnitude, controlled by the system, can be used to improve the pose estimation in such a way that another pose can be predicted. This can be used to improve guide the next pose repositioning, specifically by repositioning the item to another pose and verify the calculated pose. Moreover, this can be used to skip another repositioning step, i.e., if the pose can be calculated based on the available data the final repositioning step can be redundant, thereby speeding up the iterative refinement process by at least one cycle.

In an embodiment the pose for at least one item may be estimated by calculating a pose, preferably with a pose estimation error within an accuracy acceptance criterion, based on at least one pose estimation of another item with a coupled pose. In such embodiment knowledge of the pose coupling magnitude, equal or equivalent, can be used to improve the pose estimation in such a way that another pose can be predicted with the same advantages as described above.

In order to accurately calculate a new pose, advantageously at least two data points are provided, e.g. two pose estimations of the same item and/or different items that are pose coupled, such that the relationship between the two pose estimations can be included in the calculation. Specifically, for two pose estimations of the same item, for example after at least one item repositioning step, the repositioning magnitude will be known with high accuracy. Likewise, for two pose estimations of different pose coupled items, the pose coupling, equal or equivalent, will be known with high accuracy. The skilled person appreciates that more data allows for calculating the pose more accurately. For example, three, four, five, etc., pose estimations of the same item,

In some embodiments the pose estimation error for the estimated pose is based on the numerical model's fitting accuracy for a reference corresponding with the estimated pose; whereby said reference comprises one or more reference items in one or more certain poses. The reference may comprise (previously) acquired images and/or simulations of a reference item. Advantageously the model's fitting accuracy is determined by fitting said model on the reference, specifically on acquired images and/or simulations of a reference item.

Referring back to **Figure 15** with the exemplary embodiment of the disc-shaped item, a zone of low fitting error may be defined when the item is oriented towards to the side, which can be reliably estimated and hence results in a high fitting accuracy, and a corresponding zone of high fitting error may be defined when the item is oriented towards the front / rear, which is more difficult to reliably estimate and hence results in a low fitting accuracy. Accordingly, the pose estimation may be refused when the pose estimation error corresponds with a zone of high fitting error. This has the advantage of improving the pose estimation accuracy based on prior knowledge of the pose estimation accuracy by avoiding zones with high fitting error even if a pose estimation with an estimation error within the acceptance criterion is obtained.

In an embodiment the pose estimation error may be determined by fitting the numerical model on at least one reference with a reference item in a known pose, preferably a plurality of reference images of a reference item in a plurality of known poses, and mapping the fitting accuracy as a function of reference item's known pose or plurality of known poses. The pose estimation can be determined through e.g. a look-up table, wherein the model looks up the local minimal error as a function of the model's fitting accuracy for a specific error. Advantageously the pose estimation error is dynamically calculated based on the estimated pose in relation the mapped model's fitting accuracy.

In an embodiment a pose estimation error may be mapped by fitting the numerical model onto at least one reference image with a reference item in a known pose, preferably a plurality of reference images of a reference item in a plurality of known poses, and classifying said map into at least two zones based on a threshold value. Advantageously the map includes at least a zone of (relatively) low fitting error and a zone of (relatively) high fitting error, but more zones may be included depending on the desired accuracy. Further, the pose estimation may be refined based on the map of the numerical model's fitting accuracy, specifically, by refining the pose estimation of at least one item in a zone of high fitting error until the estimated pose reaches a zone of low fitting error. The skilled person understands that the threshold value for classifying the zones can be easily adapted based on the required inspection accuracy, globally or locally, for example if an accuracy of 1° is required, the threshold can be set at ±1°, and so on.

In an embodiment a pose estimation can refined further for at least one, preferably every, item by providing image data to an ML model, wherein said model was previously trained based a plurality of variables and one or more sets of training data, and configuring the ML model to generate a map of fitting accuracy based on the relationship between the pose and the fitting accuracy of the fitted model, and refine the pose estimation based on said map of fitting accuracy, preferably by accepting or refusing the said pose estimation based on said map. The training data may include a plurality of reference images of an item positioned in a plurality of relevant poses, advantageously all possible poses. The ML may be based on one or more images of the same or adjacent items, prior or in the process of pose estimation, by considering equal or equivalent angles between overlapping selected images.

In an embodiment the acceptance criterion is based on the numerical model's fitting accuracy for a reference with a plurality of different poses; whereby said reference comprises one or more reference items in a plurality of certain poses; whereby said plurality of reference poses is divided into at least two zones based on an accuracy threshold value, including a zone of high pose estimation error and a zone of low pose estimation error; and, wherein the pose estimation is iteratively refined until the pose estimation error is in a zone of low pose estimation error. The reference may comprise (previously) acquired images and/or simulations of a reference item. Advantageously the model's fitting accuracy is determined by fitting said model on the reference, specifically on acquired images and/or simulations of a reference item.

Referring back to **Figure 14** with the exemplary embodiment of the disc-shaped item, a zone of pose estimation (PE) error may be defined based on a threshold of [1°], i.e., any pose estimation with an accuracy of ±1° can be regarded as a low PE error, any pose estimation with an accuracy above ±1° accuracy, such as ±5° or ±10°, can be regarded as a high PE error, In the illustrated example, the pose estimation accuracy of ±1° can be reached when the item is oriented towards to the side but the model's fitting accuracy will fail to reach said threshold when the item is oriented towards the front / rear.

In an embodiment one or more acceptance criterion, specifically the acceptance criterion value, for at least one, preferably every, item can be determined by providing image data to an ML model, wherein said model was previously trained based a plurality of variables and one or more sets of training data, and configuring the ML model to calculate one or more acceptance criterions based on the relationship between the item's pose and the fitting accuracy of the fitted model. The training data may include a plurality of reference images of an item positioned in a plurality of relevant poses, advantageously all possible poses.

In an embodiment the pose estimation may be refined by ordering the plurality of items based on the pose estimation error. The model's fitting accuracy is typically dependent on the real item's pose, *i.e.,* if the item is in a pose that is difficult to estimate this will result in a higher pose estimation error and therefore need be repositioned more, *e.g.* rotated further, than if it were to be in a pose with a low pose estimation error. Hence, by ordering the item such that the repositioning will be executed based on knowledge of the fitting's accuracy, the total number of repositioning steps can be minimised to increase the system's speed and efficiency.

Therefore, it is clear that refining the pose estimation of items that have a (relatively) low pose estimation error before refining the pose estimation of items that a (relatively) high pose estimation may reduce the total number of repositioning steps for the iterative refinement process.

In a preferred embodiment the pose estimation may be refined by sorting the items in ascending order based on their pose estimation error, from the item having the lowest pose estimation error to the item having the highest pose estimation error. This has the advantage of further streamlining the item pose estimation order.

In another preferred embodiment the pose estimation may be refined by grouping the plurality of items into groups based on their pose estimation error. Preferably the items are grouped into at least two groups based on a threshold value, *e.g.* low estimation error group and high estimation error group, and refining the pose estimation of the plurality of items based on said groups, from the group containing items with the lowest estimation errors to the group containing items with the highest pose estimation errors. This has the advantage of further streamlining the item pose estimation order.

In an embodiment the amplitude for the next item repositioning may be based on the current pose estimation error. The repositioning amplitude as used in the present context refers to the value of the item's repositioning, *e.g.* the rotation angle, the tilt angle, and/or the displacement along the x,y,z-axes. As described above, the model's fitting accuracy is typically dependent on the real item's pose, and hence adjusting the repositioning amplitude based on the pose estimation error, *e.g.* increasing the amplitude for a high estimation error, may reduce the number of repositioning steps compared to a defaults repositioning amplitude. Advantageously, the repositioning amplitude may be calculated based on a relationship between the pose estimation error and a default repositioning amplitude (e.g. rotation angle).

In an embodiment the repositioning amplitude may be increased if the pose estimation error is higher than at least one threshold value and/or decreased if said error is lower. Preferably, the item repositioning amplitude is based on a default value, and adjusted to another value, predefined or dependent on the default value, if the pose estimation error is higher and/or lower than at least one threshold value. For example, the default repositioning amplitude can be doubled if the pose estimation error exceeds a first threshold and tripled if the pose estimation error exceeds a second threshold. Alternatively, the repositioning amplitude can be set to another value if the error exceeds a threshold. The same applies for low errors, e.g., the repositioning amplitude can be halved if the pose estimation error exceeds a threshold, and so on.

In an embodiment the repositioning amplitude may be determined by fitting the numerical model on at least one reference image with a reference item in a known pose, preferably a plurality of reference images of a reference item in a plurality of known poses, mapping the fitting accuracy as a function of reference item's known pose or plurality of known poses, looking up a, preferably nearest, zone of highest fitting accuracy, and determining the repositioning amplitude based on a difference between the pose estimation error and said highest fitting accuracy zone. The repositioning amplitude can be determined through e.g. a look-up table, wherein the model looks up the local minimal error as a function of the model's fitting accuracy for a specific error.

Referring back to **Figure 15** with the exemplary embodiment of the disc-shaped item, when the pose estimation is in a zone of high fitting error, e.g. at position A, the item is likely oriented towards to the front / rear. Based on this high fitting error, the nearest zone of low fitting error can be reached by rotating the item by approximately 90°, e.g. towards position B. Hence, by rotating the item by 90°, the item will likely become oriented sideways, allowing for more accurate pose estimation. Hence, by repositioning the item directly from position A to position B, e.g. rotating by 90°, substantial time can be saved compared to randomly repositioning the item in predefined steps, e.g. rotating by 1° - 10°, until the pose estimation is sufficiently accurate.

In an embodiment one or more acceptance criterion, specifically, a fitting with a high pose estimation error can be correlated with the item likely being oriented sideways. Hence, to achieve a more accurate estimation it is preferred to rotate the item by for example, approximately 90 degrees, such that it orients towards its side. In comparison, if for the same item a fitting with a low pose estimation error is obtained, the item is likely oriented more towards to the front or rear, and hence would require a lower rotation angle, e.g., for example lower than 90 degrees.

In an embodiment one or more repositioning amplitudes for at least one, preferably every, item can be determined by providing image data to an ML model, wherein said model was previously trained based a plurality of variables and one or more sets of training data, and configuring the ML model to calculate one or more repositioning amplitudes based on the relationship between the item's pose and the fitting accuracy of the fitted model. The training data may include a plurality of reference images of an item positioned in a plurality of relevant poses, advantageously all possible poses.

In an embodiment a pose estimation for at least one, preferably every, item may be refined based on template matching; whereby said template matching comprises acquiring at least one projection image containing said item at a pose with a pose estimation error within the acceptance criterion, matching said acquired image with a plurality of reference images, said reference images comprising one or more reference items in a plurality of certain poses preferably adjacent to the estimated pose, and selecting a pose for which the highest image matching accuracy is obtained.

In an embodiment a pose estimation for at least one, preferably every, item may be refined by matching at least one projection image corresponding with a pose estimation having a pose estimation error within the acceptance criterion, with a plurality of reference images of a reference item in a plurality of known poses adjacent to the estimated pose; and selecting the known pose of the reference item for which the highest image matching accuracy is obtained, between said projection image and the reference image.

Template matching has the advantage of improving the pose estimation based on model's fitting with an image matching based approach. To clarify, fitting of a numerical model onto image data may have lower accuracy for low repositioning adjustments when compared to image matching. Referring again back to the exemplary embodiment of the disc-shaped item, if said item is positioned in a full front view a model can be fitted with a pose estimation error within the acceptance criterion, which model is accurate up to, for example, 1.0 rotational degrees. Accordingly, rotating said item by 0.1 degrees along its central axis, may result in the same model fitting, since the item repositioning value is smaller than the model's fitting accuracy. In such embodiment, the pose estimation may be refined further by comparing with the acquisition image with a plurality of images, each image representing a reference item rotated by, for example, 0.1 degrees. Accordingly, the reference image having the highest matching with the acquired image will represent the item's pose accurately up to 0.1 rotational degrees. The skilled person appreciates that the listed values are exemplary and the improvement in accuracy is dependent on e.g. the fitting accuracy of the model.

In an embodiment a pose estimation for at least one, preferably every, item is refined by matching at least one projection image corresponding with a pose estimation having a pose estimation error within the acceptance criterion, with a plurality of reference images of a reference item in a plurality of known poses adjacent to the estimated pose; and selecting the known pose of the reference item for which the highest image matching accuracy is obtained, between said projection image and the reference image. As described above, the image matching based approach may have a higher accuracy than the fitted model, but will typically require more processing time. Hence, by applying the image matching after the pose has been estimated with a fitted model, the system's overall efficiency can be improved. An exemplary embodiment based on a combination of numerical model fitting and template matching approaches is shown in **Figure 10****.**

In an embodiment the pose is estimated by fitting a numerical model onto a landmark present in the same projection image. Specifically, the pose estimation may comprise acquiring at least one projection image containing at least one item and at least one landmark, and fitting at least one numerical model corresponding with a known pose on said landmark.

Provision of a landmark on the image data has various advantages for the pose estimation algorithm. Firstly, because the landmarks dimensional and spatial parameters are known beforehand, the landmark may serve as a fitting reference point to improve the model's fitting accuracy on the item. For example, the landmark size may serve as a relative scale to estimate dimensions of the item more quickly in the fitted model. Secondly, the landmark may serve as a tracking reference to accurately track repositioning of the item to different poses, which otherwise can only be tracked mechanically via the actuator. The previously described embodiments for the pose estimation of an item can also be applied for the landmark, unless specified otherwise, and as such will not be repeated for the sake of brevity.

An exemplary embodiment of a landmark is shown in **Figure 7****,** wherein the landmark 9 is coupled to the holder 4. This has the advantage that the landmark 9 is independent of the item mount 5, *i.e.,* it remains in the same pose when the item is repositioned via the item mount 5, such as rotation of the item 6 via an actuator 7.

Another exemplary embodiment of a landmark is shown in **Figure 8****,** wherein the landmark 9 is coupled to the mount 5. This has the advantage that the landmark 9 is dependent on the item mount 5, *i.e.,* the landmark's pose will simultaneously and equally change when the item is repositioned via the item mount 5, such as rotation of the item 6 via an actuator 7.

The different embodiment of the landmarks each have their own advantages and disadvantages, and the skilled person is aware of how much to make use of the landmark to improve the pose estimation. Advantageously, these embodiments may be combined. The provision of a landmark is particularly advantageous for pose estimation of an item with a limited number of structural features e.g. highly symmetrical items such as spheres or cones. In such an embodiment the landmark can enhance the pose estimation by providing a reference in the projection image for the model to fit. Additionally, the landmark may be unique to the item mount such that it can serve to identify the mount in the image data, e.g., contain a unique identifier.

In some embodiments the pose may be determined and/or refined based on a landmark specific to said item, whereby the pose of the item is determined based on the pose estimation for said landmark specific to said item. Preferably, the pose estimation may be refined based on a position analysis of one or more known landmarks which are integrated on the mount and/or holder.

Accordingly, the method may comprise the steps of:
- mounting the plurality of items having an uncertain pose on a holder;
- estimating a pose for at least one item; wherein said pose estimation comprises acquiring at least one projection image containing said item and a landmark, fitting at least one numerical model of a certain pose on said image, and calculating a pose estimation error representing said model's fitting accuracy;
- iteratively refining the pose estimation by simultaneously repositioning the plurality of items to a different pose based on the pose estimation error, until the pose estimation error is within an accuracy acceptance criterion.

The skilled person appreciates that the embodiments described herein for the pose estimation of an item can be readily modified for dynamically estimating the pose of one or more landmarks, advantageously specific to said item. Hence, any embodiments described in the present description relating to pose estimation of an item also form embodiments relating to pose estimation of a landmark for said item.

In an embodiment the pose is estimated by fitting a numerical model onto a feature of said item, preferably comprising a defect.

In some embodiments the pose may be determined and/or refined based on a feature specific to said item, whereby the pose of the item is determined based on the pose estimation for said feature specific to said item. Preferably, the pose estimation may be refined based on a position analysis of one or more known features which are specific to said item, such as known production and/or assembly errors.

Accordingly, the method may comprise the steps of:
- mounting the plurality of items having an uncertain pose on a holder;
- estimating a pose for at least one item; wherein said pose estimation comprises acquiring at least one projection image containing a feature of said item, fitting at least one numerical model of a certain pose on said image, and calculating a pose estimation error representing said model's fitting accuracy;
- iteratively refining the pose estimation by simultaneously repositioning the plurality of items to a different pose based on the pose estimation error, until the pose estimation error is within an accuracy acceptance criterion.

The skilled person appreciates that the embodiments described herein for the pose estimation of an item can be readily modified for dynamically estimating the pose of one or more features of said item. Hence, any embodiments described in the present description relating to pose estimation of an item also form embodiments relating to pose estimation of a feature of said item, such as defects.

When the item's pose is reliably estimated in accordance with one or more of the above-described embodiments, said item can be analysed to determine one or more item parameters or characteristics thereof, such as defects *e.g.* manufacturing or assembly errors. Item inspection requires very detailed image data, *e.g.* projection images acquired with a high resolution or zoom level, in order to detect the smallest deviations from quality, which may be vital for its function once the product is assembled.

However, a complete volumetric, *i.e.,* 3D, inspection of each item would require a large number of projection images and processing time, which in a high throughput quality inspection environment is not economically feasible. As such, the inspection will advantageously be limited to a preselected pose of interest (POI) in which the most critical defect can be detected based on prior knowledge of the item. For example, inspection of an item having a region that is known to be easily deformed or damaged during manufacturing, such as a corner or edge, the POI may be selected based on an orientation wherein said region is clearly visible, advantageously perpendicular to the projection central axis. In another example, for an item consisting of two attached components the POI may be selected based on an orientation and zoom level focusing on said attachment point, and so on. Positioning of the inspected item on the selected POI is imperative for the quality of the item inspection, which can be done based on the estimated pose, *e.g.* the pose estimated by the control system.

Accordingly, the control system may be further configured to inspect at least one item for at least one pose of interest (POI) based on the pose estimation; wherein said item inspection comprises repositioning the item at the POI, acquiring at least one projection image of said item and/or a region of interest (ROI) of said item, and analysing said projection image to determine one or more item characteristics, such as defects. Projection images acquired by the imaging device 3 for inspection of the item, hereinafter referred to as "inspection image data", can be sent to the control system 8 similarly to how the estimation image data is sent as discussed with reference to **Figure 1****.** Likewise, the same control system 8 may steer the controllable holder 4 or any components thereof to reposition an item to the POI, and advantageously instruct the imaging device 3 to acquire a projection image once said item is positioned in the POI.

In order to inspect the item and determine its characteristics, the control system may be configured to employ various image processing techniques known in the art *e.g.* to process and analyse image data, machine learning (ML) algorithm and/or models. Hereinunder various embodiments of the control system will be described aimed at realising the above-described item inspection functionality of the control system, but the present disclosure is not limited thereto since alternative or newer image processing techniques can be easily implemented in order to improve the overall efficiency of the system.

In an embodiment the item inspection may be performed at different viewing distance, preferably at viewing distance that is lower than the viewing distance at which the pose estimation is performed and/or a zoom level that is higher than the zoom level at which the pose estimation is performed. Specifically, the item inspection may comprise repositioning the item to another, for example second, viewing distance / zoom level, acquiring at least one projection image of said item and/or a region of interest (ROI) at the other viewing distance / zoom level, and analysing said projection image to determine one or more item characteristics, such as metrology or defects.

An exemplary embodiment of the item inspection is depicted in **Figure 10****,** illustrating the item holder 4 at varying viewing distances, specifically at least two different viewing distances. The pose estimation can be performed at a first viewing distance 21, characterized by the distance of the holder 4 from the source 2 and detector 3, allowing the acquisition of a projection image containing the plurality of items 6. This approach can enhance the efficiency of pose estimation by enabling simultaneous estimation of a plurality of poses corresponding to the plurality of items.

Furthermore, once the plurality of poses has been estimated within an acceptable pose estimation error, the holder can be repositioned to a second viewing distance 22. At this distance, characterized by the distance of the holder from the source 2 and detector 3, a projection image of higher accuracy can be acquired, enabling more detailed inspection of an item. However, because the holder 4 is positioned closer to the source 2, a projection image containing the plurality of items 6 can no longer be acquired due to the restricted viewing angle - indicated by the dotted lines. Accordingly, in this second viewing distance 22, the holder 4 can be moved along the holder's longitudinal axis 42 until at least one item of the plurality of items 6 is positioned along the projection central axis 32. This positioning can ensure that at least projection image of the inspected item 6 can be acquired at an optimal viewing angle relative to the source 2 and detector 3. Advantageously, the pose of the inspected item can be adjusted based on the corresponding estimated pose, ensuring that the projection image captures the item as a pose that allows for optimal image analysis, for example, in a particular region-of-interest. The holder 4 can then be moved again along the holder's longitudinal axis 42 until another item of the plurality of items 6 is positioned along the projection central axis 32. The latter step can be repeated for every item of the plurality of items 6 until the inspection of the items is completed.

Another exemplary embodiment of the item inspection is depicted in **Figure 11****,** illustrating the item holder 4 at least two different viewing distances. Similarly to the embodiment of **Figure 10****,** the pose estimation in **Figure 11** can be performed at a first viewing distance 21 that allows the acquisition of a projection image containing the plurality of items 6.

Furthermore, once the plurality of poses has been estimated within an acceptable pose estimation error, the holder can be similarly repositioned to a second viewing distance 22. At this distance, however, the distance of the holder 4 from the source 2 and detector 3 is selected such that a projection image containing at least two items of the plurality of items 6 can still be acquired. This approach enhances the efficiency of pose inspection by enabling simultaneous item inspection of a portion of the plurality of items. The distance and holder position are selected such that both items are positioned within the viewing angle of the source- indicated by the dotted lines. Nonetheless, since none of the items in the depicted embodiment are positioned along the projection central axis 32, the acquired projection image can depict a suboptimal viewing of the inspected items. Therefore, the pose of the inspected items can advantageously be individually adjusted based on the corresponding estimated pose, ensuring that the projection image captures the item in a pose that allows for optimal image analysis. This is depicted in **Figure 10** by rotating the items such that they lie along the dotted lines representing the optimal viewing angle of the source 3. It should be noted that the items may be rotated in different directions, as indicated by the arrows, for example, clockwise and counterclockwise, but they can also be rotated in the same direction but along different angles.

In an embodiment, the optimal
In an embodiment, the varying viewing distance may comprise a different tilt angle. For instance, the pose estimation can be performed at a tilt angle that enables more accurate pose estimation, while the item inspection can be carried out at another tilt angle, such as a second tilt angle, that facilitates improved inspection of a specific region of interest (ROI) on one or more items.

In an embodiment the item inspection may comprise generating a defect map based on the inspection image data and detecting the presence of a defect based on said defect map. Preferably the defect map is generated by aligning the acquired image with a reference image, and mapping any deviations therefrom as potential defects, preferably by subtracting the reference image from the acquired image. The subtracted image then shows the deviation of the inspection image data from the reference image. Advantageously, image differencing can be applied to compare each pixel of the real image with the corresponding pixel of the reference.

In an embodiment the reference image may be an image of a reference item that is advantageously devoid of defects, or alternatively contains defects within an acceptable quality level. Preferably, the reference image is generated by acquiring a plurality of projection images of the reference item, and averaging said images to obtain a single averaged out reference image. This way a reference image is obtained that is devoid of imaging artifacts. Alternatively, the reference image may be a virtual model of the item, *e.g.* simulated CAD model.

In an embodiment the plurality of items 6 is inspected sequentially, one by one. The inspection order may correspond to the item mounting order on the holder 4, *e.g.* left to right or right to left. This allows for faster inspection time by minimising the number of holder repositioning steps. Alternatively, the plurality of items may be inspected based on their estimated pose, to limit the number of item repositioning steps.

In an embodiment the item or its features (e.g. ROI) may be tracked in the inspection image data by matching the inspected item with a unique identifier captured on at least one projection image thereof. An exemplary embodiment of an identifier 61 is shown in **Figures 9** **and** **10****,** which is provided on the mount 5. Nonetheless, such identifiers can be provided on any other component of the holder that is unique to the item, such as an adjacent landmark, or even the item itself.

In an embodiment the acquired image may be aligned with a reference image by providing image data to a ML-based coarse image aligner, wherein said model was previously trained based a plurality of broad geometrical variables and one or more sets of training data, and configuring the ML model to coarsely align said images by matching one or more geometrical features; and providing said coarsely aligned images to a ML-based fine image aligner, wherein said model was previously trained based a plurality of local geometrical variables and one or more sets of training data, and configuring the ML model to coarsely align said images by matching one or more local features. The training data of the ML-based coarse image aligner may include a plurality of reference images with a broad scope of the item and/or a landmark, preferably images containing the whole item. The training data of the ML-based fine image aligner may include a plurality of reference images with a narrow scope of the item and/or a landmark, preferably images focusing on a specific ROI.

In an embodiment the item inspection may comprise generating a defect map by
- dividing the real image into a plurality of image tiles having dimensions corresponding with those of reference tiles, preferably generated by dividing a reference image into a plurality of reference tiles;
- aligning every real image tile with the corresponding reference image tile;
- generating a plurality of defect map tiles by mapping any deviations as potential defects, preferably by subtracting each reference tile from the corresponding image tile; and
- synthesising a partial and/or complete defect map by re-realigning the defect map tiles based on the item and/or a ROI.

In an embodiment a reference image for the item inspection may be generated by acquiring a plurality of projection images of a reference item and locally averaging out said images to obtain an averaged reference image devoid of measurement artifacts, such as noise. Preferably, a reference image is generated for each POI, advantageously for every possible pose of the item. The same method can be implemented generating a reference image for the pose estimation and/or training data for one or more ML models.

Another aspect of the present disclosure relates to a control system configured for performing a method in accordance with any of the herein described embodiments when provided with at least one acquired projection image as input.

Another aspect of the present disclosure relates to a radiation imaging system comprising a radiation imaging device and a processor, wherein said radiation imaging device is configured for acquiring projection images of an item, and said processor is configured for performing a method in accordance with any of the herein described embodiments when provided with at least one acquired projection image as input.

Another aspect of the present disclosure relates to a computer program product for implementing, when executed on a processor, a method in accordance with any of the herein described embodiments when provided with at least one acquired projection image as input.

Another aspect of the present disclosure relates to a use of a radiation imaging system configured for performing a method in accordance with any of the herein described embodiments when provided with at least one, preferably a plurality of items.

Another aspect of the present disclosure relates to training data, preferably comprising image and/or calibration data of a reference sample, used by the radiation imaging system to perform a method in accordance with any of the herein described embodiments, preferably for training a ML based model. In an embodiment the method or system are used for one or more of quality control, testing, classification, selection, metrology, and/or sorting of a plurality of items in a manufacturing or handling environment for manufacturing or manipulating the plurality of items; preferably in inline or offline inspection of the item in an industrial process.

Reference throughout this specification to "one embodiment" or "an embodiment" means that a particular feature, structure or characteristic described in connection with the embodiment is included in at least one embodiment of the present disclosure. Thus, appearances of the phrases "in one embodiment" or "in an embodiment" in various places throughout this specification are not necessarily all referring to the same embodiment.

As used herein, the terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" when referring to recited members, elements or method steps also include embodiments which "consist of" said recited members, elements or method steps.

The singular forms "a", "an", and "the" include both singular and plural referents unless the context clearly dictates otherwise.

As used herein, relative terms, such as "left," "right," "front," "back," "top," "bottom," "over," "under," etc., are used for descriptive purposes and not necessarily for describing permanent relative positions. It is to be understood that such terms are interchangeable under appropriate circumstances and that the embodiment as described herein are capable of operation in other orientations than those illustrated or described herein unless the context clearly dictates otherwise.

Objects described herein as being "adjacent" to each other reflect a functional relationship between the described objects, that is, the term indicates the described objects must be adjacent in a way to perform a designated function which may be a direct (*i.e.* physical) or indirect (*i.e.* close to or near) contact, as appropriate for the context in which the phrase is used.

Objects described herein as being "connected" or "coupled" reflect a functional relationship between the described objects, that is, the terms indicate the described objects must be connected in a way to perform a designated function which may be a direct or indirect connection in an electrical or nonelectrical (*i.e*. physical) manner, as appropriate for the context in which the term is used.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

As used herein, the term "about" is used to provide flexibility to a numerical value or range endpoint by providing that a given value may be "a little above" or "a little below" said value or endpoint, depending on the specific context. Unless otherwise stated, use of the term "about" in accordance with a specific number or numerical range should also be understood to provide support for such numerical terms or range without the term "about". For example, the recitation of "about 30" should be construed as not only providing support for values a little above and a little below 30, but also for the actual numerical value of 30 as well.

The recitation of numerical ranges by endpoints includes all numbers and fractions subsumed within the respective ranges, as well as the recited endpoints. Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the disclosure described herein are capable of operation in other sequences than described or illustrated herein.

Reference in this specification may be made to devices, structures, systems, or methods that provide "improved" performance (*e.g*. increased or decreased results, depending on the context). It is to be understood that unless otherwise stated, such "improvement" is a measure of a benefit obtained based on a comparison to devices, structures, systems or methods in the prior art. Furthermore, it is to be understood that the degree of improved performance may vary between disclosed embodiments and that no equality or consistency in the amount, degree, or realization of improved performance is to be assumed as universally applicable.

## Claims

1. Method for inspecting a plurality of items with a radiation imaging system,
the method comprising the steps of:
- mounting the plurality of items with an uncertain pose on a holder, wherein the holder comprises a plurality of mounts that are rotationally coupled such that each item mounted to one of the mounts is rotated simultaneously to an equivalent degree;
- estimating a plurality of poses corresponding to the plurality of items; wherein the pose estimation comprises acquiring at least one projection image containing the plurality of items at a first zoom level, fitting a numerical model to the plurality of items on said image, wherein the numerical model comprises one or more simulations virtually representing the item at one or more poses, and calculating a pose estimation error representing the fitting accuracy of the numerical model for the plurality of items;
- iteratively refining the pose estimation by simultaneously repositioning the plurality of items to a different pose based on the pose estimation error, wherein the simultaneous repositioning includes at least a simultaneous rotation of the items along each mount's central axis such that the poses of the items are coupled, and repeating the pose estimation until the pose estimation error for the plurality of items is within an accuracy acceptance criterion; and,
- inspecting the plurality of items to determine an item characteristic; whereby the item inspection comprises repositioning the plurality of items based the corresponding estimated pose, and acquiring a plurality of projection images of the plurality of items on at least a second zoom level that is higher than the first zoom level of the pose estimation.

2. The method according to claim 1, wherein the pose is estimated by splitting up the acquired projection image into a plurality of split projection images, each image containing at least one item, preferably into a plurality of split projection images for the plurality of items, and fitting the at least one numerical model of the item onto the plurality of split projection images.

3. The method according to any one of the preceding claims, wherein the pose estimation for at least one item is refined by calculating a pose with a pose estimation error within an accuracy acceptance criterion based on at least two pose estimations of the same item at different positions.

4. The method according to any one of the preceding claims, wherein the plurality of items is repositioned equally to a different pose based on the pose estimation error; and wherein the pose estimation for at least one item is refined based on the pose estimation of another item with a coupled pose.

5. The method according to claim 4, wherein the plurality of items is repositioned equivalently to a different pose based on the pose estimation error and a viewing angle of a radiation imaging device acquiring the projection image.

6. The method according to any one of the preceding claims, the pose estimation is refined based on template matching; whereby said template matching comprises acquiring at least one projection image containing said item at a pose with a pose estimation error within the acceptance criterion, matching said acquired image with a plurality of reference images, said reference images comprising one or more reference items in a plurality of certain poses preferably adjacent to the estimated pose, and selecting a pose for which the highest image matching accuracy is obtained.

7. The method according to any one of the preceding claims, wherein the pose estimation error for the estimated pose is based on the numerical model's fitting accuracy for a reference corresponding with the estimated pose; whereby said reference comprises one or more reference items in one or more certain poses; preferably by fitting said model on an acquired and/or simulated image of said reference item.

8. The method according to any one of the preceding claims, wherein the acceptance criterion is based on the numerical model's fitting accuracy for a reference with a plurality of different poses; whereby said reference comprises one or more reference items in a plurality of certain poses; whereby said plurality of reference poses is divided into at least two zones based on an accuracy threshold value, including a zone of high pose estimation error and a zone of low pose estimation error; and, wherein the pose estimation is iteratively refined until the pose estimation error is in a zone of low pose estimation error.

9. The method according to any one of the preceding claims, wherein the method comprises estimating a pose for the plurality of items and refining the pose estimation by ordering the plurality of items based on their pose estimation error; preferably by sorting the items in ascending order, from the item having the lowest pose estimation error to the item having the highest pose estimation error.

10. The method according to any one of the preceding claims, whereby the item inspection comprises repositioning at least two items of the plurality of items based the corresponding estimated pose and a viewing angle of the radiation imaging device acquiring the projection image, and acquiring at least one projection image containing said at least two items at a second zoom level that is higher than the zoom level of the pose estimation, and repeating the item inspection until every item of the plurality of items is inspected.

11. Computer-implemented method for inspecting a plurality of items with a radiation imaging system, wherein the items are mounted on a holder comprising a plurality of mounts that are rotationally coupled such that each item mounted to one of the mounts is rotated simultaneously to an equivalent degree, the method comprising the steps of:
- receiving at least one projection image containing the plurality of items with an uncertain pose acquired at a first zoom level;
- estimating a plurality of poses corresponding to the plurality of items; wherein the pose estimation comprises fitting a numerical model to the plurality of items on said image, wherein said numerical model comprises one or more simulations virtually representing the item at one or more poses, and calculating a pose estimation error representing fitting accuracy of the numerical model for the plurality of items;
- instructing the radiation imaging system to simultaneously reposition the plurality of items to a different pose based on the pose estimation error, wherein the repositioning includes at least a rotation along each mount's central axis such that the pose of the items is coupled;
- receiving a projection image containing the plurality of items at the different pose and iteratively refining the pose estimation until the pose estimation error for the plurality of items is within an accuracy acceptance criterion;
- instructing the radiation imaging system to simultaneously reposition the plurality of items for acquiring a projection image on at least a second zoom level that is higher than the zoom level of the pose estimation;
- instructing the radiation imaging system to reposition the plurality of items based the corresponding estimated pose; and,
- receiving a plurality of projection images of the plurality of items at the second zoom level.

12. Radiation imaging system for inspecting a plurality of items, comprising:
- a radiation imaging device comprising a radiation source and a detector configured for acquiring a projection image as image data;
- a holder comprising a plurality of mounts for mounting the plurality of items at an uncertain pose, wherein the mounts are rotationally coupled such that each item mounted to one of the mounts is rotated simultaneously to an equivalent degree, and an actuator configured for simultaneously repositioning the plurality of items to a plurality of poses, wherein the simultaneous repositioning includes at least a simultaneous rotation along each mount's central axis ;
- a control system, operatively connected to the imaging device and holder, and configured to
- estimate a plurality of poses corresponding to the plurality of items based on image data acquired by the imaging device; wherein the image data comprises at least one projection image containing the plurality of items acquired at a first zoom level; wherein the pose estimation comprises fitting a numerical model to the plurality of items on said image, wherein the numerical model comprises one or more simulations virtually representing the item at one or more poses, and calculating a pose estimation error representing the fitting accuracy of the numerical model for the plurality of items;
- iteratively refine the pose estimation by instructing the holder to simultaneously reposition the plurality of items to a different pose based on the pose estimation error, wherein the simultaneous repositioning includes at least a simultaneous rotation along each mount's central axis such that the poses of the items are coupled, and repeating the pose estimation until the pose estimation error for the plurality of items is within an acceptance criterion; and,
- inspect the plurality of items to determine an item characteristic based on second image data acquired by the imaging device; whereby the item inspection comprises instructing the holder to simultaneously reposition the plurality of items to at least a second zoom level that is higher than the zoom level of the pose estimation; wherein the second image data comprises a plurality of projection images of the plurality of items at the second zoom level and the corresponding estimated pose for the item inspection.

13. The system according to the preceding claim, wherein the actuator is configured to equally reposition the plurality of items to a different pose based on the pose estimation error; and the control system is configured to refine the pose estimation for at least one item based on the pose estimation of another item with a coupled pose; preferably wherein the actuator is configured to equivalently reposition the plurality of items to a different pose based on the pose estimation error and a viewing angle of the radiation imaging device.

14. The system according to any one of claims 12-13, wherein the radiation imaging device is configured to acquire a projection image containing the plurality of item; and the control system is configured to split up said projection image for at least one item of the plurality of items; preferably into a plurality of split projection images for the plurality of items.

15. The system according to any one of claims 12-14, wherein the control system is configured to inspect at least one item in order to determine one or more item characteristics, such as defects, based on image data acquired by the imaging device at a zoom level that is higher than the zoom level of the image data acquired for the pose estimation.

## Patentansprüche

1. Verfahren zum Inspizieren einer Vielzahl von Objekten unter Verwendung eines Strahlungsbildgebungssystems, wobei das Verfahren die folgenden Schritte umfasst:
- das Anbringen der Vielzahl von Objekten in einer unsicheren Pose auf einer Befestigungsvorrichtung; wobei die Befestigungsvorrichtung mehrere Träger umfasst, die derart drehbar miteinander verbunden sind, dass jedes auf einer der Befestigungsvorrichtungen angebrachte Objekt gleichzeitig zu einem gleichwertigen Grad einer Drehung unterzogen wird;
- das Schätzen einer Vielzahl von Posen, die der Vielzahl von Objekten entsprechen; wobei die Posenschätzung das Folgende umfasst: das Erfassen mindestens eines Projektionsbildes, das die Vielzahl von Objekten auf einem ersten Vergrößerungsfaktor enthält; das Anpassen eines digitalen Modells an die Vielzahl von Objekten in dem oben genannten Bild, wobei das digitale Modell eine oder mehrere Simulationen umfasst, die das Objekt in einer oder mehreren Posen virtuell darstellen; und das Berechnen eines Posenschätzungsfehlers, der die Genauigkeit der Anpassung des digitalen Modells an die Vielzahl von Objekten darstellt;
- das iterative Verfeinern der Posenschätzung durch gleichzeitiges Neupositionieren der Vielzahl von Objekten in einer anderen Pose auf Basis des Posenschätzungsfehlers; wobei die gleichzeitige Neupositionierung mindestens eine gleichzeitige Drehung der Objekte entlang der Mittelachse jedes Trägers derart umfasst, dass die Posen der Objekte gekoppelt sind; und das Wiederholen der Posenschätzung, bis der Posenschätzungsfehler für die Vielzahl von Objekten innerhalb der Grenzen eines Genauigkeitsakzeptanzkriteriums liegt; und
- das Inspizieren der Vielzahl von Objekten, um ein Merkmal des Objekts zu bestimmen; wobei die Objektinspektion das Neupositionieren der Vielzahl von Objekten auf Basis der entsprechenden geschätzten Pose und das Erfassen einer Vielzahl von Projektionsbildern der Vielzahl von Objekten mit mindestens einem zweiten Vergrößerungsfaktor umfasst, der größer ist als der erste Vergrößerungsfaktor der Posenschätzung.

2. Verfahren nach Anspruch 1, wobei die Pose geschätzt wird, indem das erfasste Projektionsbild in eine Vielzahl von geteilten Projektionsbildern aufgeteilt wird, wobei jedes Bild mindestens ein Objekt enthält, vorzugsweise in eine Vielzahl von geteilten Projektionsbildern für die Vielzahl von Objekten, und indem das mindestens eine numerische Modell des Objekts an die Vielzahl von geteilten Projektionsbildern angepasst wird.

3. Verfahren nach einem der vorstehenden Ansprüche, wobei die Posenschätzung für mindestens ein Objekt durch Berechnen einer Pose mit einem Posenschätzungsfehler innerhalb eines Genauigkeitsakzeptanzkriteriums auf der Grundlage von mindestens zwei Posenschätzungen desselben Objekts an verschiedenen Posen verfeinert wird.

4. Verfahren nach einem der vorstehenden Ansprüche, wobei die Vielzahl von Objekten auf der Grundlage des Posenschätzungsfehlers gleichmäßig in eine andere Pose gebracht wird; und wobei die Posenschätzung für mindestens ein Objekt auf der Grundlage der Posenschätzung eines anderen Objekts mit einer gekoppelten Pose verfeinert wird.

5. Verfahren nach Anspruch 4, wobei die Vielzahl von Objekten auf der Grundlage des Posenschätzungsfehlers und eines Betrachtungswinkels einer Strahlungsbildgebungsvorrichtung, die das Projektionsbild erfasst, äquivalent zu einer anderen Pose neupositioniert wird.

6. Verfahren nach einem der vorstehenden Ansprüche, wobei die Posenschätzung auf der Grundlage eines Musterabgleichs verfeinert wird, wobei der oben genannte Musterabgleich das Folgende umfasst: das Erfassen mindestens eines Projektionsbildes, das das oben genannte Objekt in einer Pose mit einem Posenschätzungsfehler innerhalb des Akzeptanzkriteriums enthält; das Abgleichen des oben genannten erfassten Bildes mit einer Vielzahl von Referenzbildern, wobei die oben genannten Referenzbilder einen oder mehrere Referenzobjekte in einer Vielzahl sicherer Posen umfassen, die vorzugsweise an die geschätzte Pose angrenzen; und das Auswählen einer Pose, für die die höchste Bildabgleichgenauigkeit erzielt wird.

7. Verfahren nach einem der vorstehenden Ansprüche, wobei der Posenschätzungsfehler für die geschätzte Pose auf der Passgenauigkeit des numerischen Modells für eine Referenz basiert, die der geschätzten Pose entspricht; wobei die oben genannte Referenz ein oder mehrere Referenzobjekte in einer oder mehreren sicheren Posen umfasst; vorzugsweise durch Anpassen des oben genannten Modells an ein erfasstes und/oder simuliertes Bild des oben genannten Referenzobjekts.

8. Verfahren nach einem der vorstehenden Ansprüche, wobei das Akzeptanzkriterium auf der Passgenauigkeit des numerischen Modells für eine Referenz mit einer Vielzahl unterschiedlicher Posen basiert; wobei die oben genannte Referenz ein oder mehrere Referenzobjekte in einer Vielzahl sicherer Posen umfasst; wobei die oben genannte Vielzahl von Referenzposen auf der Grundlage eines Genauigkeitsschwellenwerts in mindestens zwei Bereiche unterteilt ist, darunter einen Bereich mit hohem Posenschätzungsfehler und einen Bereich mit niedrigem Posenschätzungsfehler; und wobei die Posenschätzung iterativ verfeinert wird, bis der Posenschätzungsfehler in einem Bereich mit geringem Posenschätzungsfehler liegt.

9. Verfahren nach einem der vorstehenden Ansprüche, wobei das Verfahren Folgendes umfasst: das Schätzen einer Pose für die Vielzahl von Objekten und das Verfeinern der Posenschätzung durch Ordnen der Vielzahl von Objekten auf der Grundlage ihres Posenschätzungsfehlers, vorzugsweise durch Sortieren der Objekte in aufsteigender Reihenfolge, beginnend mit dem Objekt mit dem geringsten Posenschätzungsfehler bis hin zu dem Objekt mit dem höchsten Posenschätzungsfehler.

10. Verfahren nach einem der vorstehenden Ansprüche, wobei die Objektsinspektion Folgendes umfasst: das Neupositionieren von mindestens zwei Objekten aus der Vielzahl von Objekten auf der Grundlage der entsprechenden geschätzten Pose und eines Betrachtungswinkels der Strahlungsbildgebungsvorrichtung, die das Projektionsbild erfasst, und das Erfassen mindestens eines Projektionsbildes, das die oben genannten mindestens zwei Objekte in einem zweiten Vergrößerungsfaktor enthält, der höher ist als der Vergrößerungsfaktor der Posenschätzung; und das Wiederholen der Objektsinspektion, bis jedes Objekt aus der Vielzahl von Objekten inspiziert ist.

11. Computerimplementiertes Verfahren zum Inspizieren einer Vielzahl von Objekten mit einem Strahlungsbildgebungssystem, wobei die Objekte auf einer Befestigungsvorrichtung angebracht sind, die eine Vielzahl von Trägern umfasst, die drehbar miteinander verbunden sind, sodass jedes an einem der Träger angebrachte Objekt gleichzeitig um einen gleichwertigen Grad gedreht wird, wobei das Verfahren die folgenden Schritte umfasst:
- das Empfangen mindestens eines Projektionsbildes, das die Vielzahl von Objekten mit einer unsicheren Pose enthält, das bei einem ersten Vergrößerungsfaktor erfasst wurde;
- das Schätzen einer Vielzahl von Posen, die der Vielzahl von Objekten entsprechen; wobei die Posenschätzung Folgendes umfasst: das Anpassen eines numerischen Modells an die Vielzahl von Objekten auf dem oben genannten Bild, wobei das oben genannte numerische Modell eine oder mehrere Simulationen umfasst, die die Objekte in einer oder mehreren Posen virtuell darstellen; und das Berechnen eines Posenschätzungsfehlers, der die Anpassungsgenauigkeit des numerischen Modells für die Vielzahl von Objekten darstellt;
- das Anweisen des Strahlungsbildgebungssystems, die Vielzahl von Objekten gleichzeitig in eine andere Pose zu bringen, basierend auf dem Posenschätzungsfehler, wobei das Neupositionieren mindestens eine Drehung entlang der zentralen Achse jedes Trägers derart umfasst, dass die Pose der Objekte gekoppelt ist;
- das Empfangen eines Projektionsbildes, das die Vielzahl von Objekten in der anderen Pose enthält, und das iterative Verfeinern der Posenschätzung, bis der Posenschätzungsfehler für die Vielzahl von Objekten innerhalb eines Genauigkeitsakzeptanzkriteriums liegt;
- das Anweisen des Strahlungsbildgebungssystems, die Vielzahl von Objekten gleichzeitig neu zu positionieren, um ein Projektionsbild auf mindestens einem zweiten Vergrößerungsfaktor zu erfassen, der höher ist als der Vergrößerungsfaktor der Posenschätzung;
- das Anweisen des Strahlungsbildgebungssystems, die Vielzahl von Objekten basierend auf der entsprechenden geschätzten Pose neu zu positionieren; und
- das Empfangen einer Vielzahl von Projektionsbildern der Vielzahl von Objekten auf dem zweiten Vergrößerungsfaktor.

12. Strahlungsbildgebungssystem zur Inspektion einer Vielzahl von Objekten, das Folgendes umfasst:
- eine Strahlungsbildgebungsvorrichtung, die eine Strahlungsquelle und einen Detektor umfasst, der derart ausgestaltet ist, dass er ein Projektionsbild als Bilddaten erfasst;
- eine Befestigungsvorrichtung, die mehrere Träger zum Befestigen der Vielzahl von Objekten in einer unsicheren Pose umfasst, wobei die Träger drehbar miteinander verbunden sind, sodass jedes an einem der Träger befestigte Objekt gleichzeitig um einen gleichwertigen Winkel gedreht wird, und einen Aktuator, der derart ausgestaltet ist, dass er die Vielzahl von Objekten gleichzeitig in mehrere Posen neu positioniert, wobei die gleichzeitige Neupositionierung mindestens eine gleichzeitige Drehung entlang der zentralen Achse jedes Trägers umfasst;
- ein Steuersystem, das funktionsfähig mit der Bildgebungsvorrichtung und dem Träger verbunden und derart ausgeführt ist, dass es
- eine Vielzahl von Posen, die der Vielzahl von Objekten entsprechen, auf der Grundlage von Bilddaten schätzt, die von der Bildgebungsvorrichtung erfasst wurden; wobei die Bilddaten mindestens ein Projektionsbild umfassen, das die Vielzahl von Objekten enthält, die bei einem ersten Vergrößerungsfaktor erfasst wurden; wobei die Posenschätzung Folgendes umfasst: das Anpassen eines numerischen Modells an die Vielzahl von Objekten auf dem oben genannten Bild umfasst, wobei das numerische Modell eine oder mehrere Simulationen umfasst, die das Objekt in einer oder mehreren Posen virtuell darstellen; und das Berechnen eines Posenschätzungsfehlers, der die Anpassungsgenauigkeit des numerischen Modells für die Vielzahl von Objekten darstellt;
- die Posenschätzung iterativ verfeinert, dadurch dass es den Träger anweist die Vielzahl von Objekten gleichzeitig auf der Grundlage des Posenschätzungsfehlers in eine andere Pose zu bringen, wobei die gleichzeitige Neupositionierung mindestens eine gleichzeitige Drehung derart entlang der zentralen Achse jedes Trägers umfasst, dass die Posen der Objekte gekoppelt sind, und die Posenschätzung wiederholt, bis der Posenschätzungsfehler für die Vielzahl von Objekten innerhalb eines Akzeptanzkriteriums liegt; und
- die Vielzahl von Objekten inspiziert, um eine Objektcharakteristik auf der Grundlage von zweiten Bilddaten zu bestimmen, die von der Bildgebungsvorrichtung erfasst wurden; wobei die Objektinspektion das Anweisen des Trägers umfasst, die Vielzahl von Objekten gleichzeitig auf mindestens einen zweiten Vergrößerungsfaktor zu positionieren, der höher ist als der Vergrößerungsfaktor der Posenschätzung; wobei die zweiten Bilddaten eine Vielzahl von Projektionsbildern der Vielzahl von Objekten bei dem zweiten Vergrößerungsfaktor und die entsprechende geschätzte Pose für die Objektinspektion umfassen.

13. System gemäß dem vorstehenden Anspruch, wobei der Aktuator derart ausgestaltet ist, dass er die Vielzahl von Objekten auf der Grundlage des Posenschätzungsfehlers gleichmäßig in eine andere Pose neu positioniert; und das Steuersystem derart ausgeführt ist, dass es die Posenschätzung für mindestens ein Objekt auf der Grundlage der Posenschätzung eines anderen Objekts mit einer gekoppelten Pose verfeinert; vorzugsweise wobei der Aktuator derart ausgeführt ist, dass er die Vielzahl von Objekten auf der Grundlage des Posenschätzungsfehlers und eines Betrachtungswinkels der Strahlungsbildgebungsvorrichtung gleichwertig in eine andere Pose neu positioniert.

14. System gemäß einem der Ansprüche 12-13, wobei die Strahlungsbildgebungsvorrichtung derart ausgestaltet ist, dass sie ein Projektionsbild erfasst, das die Vielzahl von Objekten enthält; und das Steuersystem derart ausgestaltet ist, dass es das oben genannte Projektionsbild für mindestens ein Objekt aus der Vielzahl von Objekten aufteilt, vorzugsweise in eine Vielzahl von geteilten Projektionsbildern für die Vielzahl von Objekten.

15. System nach einem der Ansprüche 12 bis 14, wobei das System derart ausgestaltet ist, dass es mindestens ein Objekt inspiziert, um ein oder mehrere Merkmale des Objekts, wie beispielsweise Fehler, auf der Basis von Bilddaten zu bestimmen, die von der Bildgebungsvorrichtung mit einem Vergrößerungsfaktor erfasst wurden, der größer ist als der Vergrößerungsfaktor der Bilddaten, die zur Posenschätzung erfasst wurden.

## Revendications

1. Procédé destiné à inspecter une pluralité d'objets à l'aide d'un système d'imagerie par rayonnement, dans lequel le procédé comprend les étapes au cours desquelles :
- on place la pluralité d'objets avec un positionnement incertain sur un dispositif de fixation ; dans lequel le dispositif de fixation comprend une pluralité de supports qui sont couplés en rotation d'une manière telle que chaque objet placé sur l'un des supports est soumis à une rotation de manière simultanée jusqu'à un degré équivalent ;
- on estime une pluralité de poses qui correspondent à la pluralité d'objets ; dans lequel l'estimation de pose comprend l'acquisition d'au moins une image de projection qui contient la pluralité d'objets à un premier facteur de grossissement, l'ajustement d'un modèle numérique la pluralité d'objets dans ladite image ; dans lequel le modèle numérique comprend une ou plusieurs simulations qui représentent de manière virtuelle l'objet dans une ou plusieurs poses, et le calcul d'une erreur d'estimation de pose qui représente la précision d'ajustement du modèle numérique pour la pluralité d'objets ;
- on affine de manière itérative l'estimation de pose en repositionnant de manière simultanée la pluralité d'objets dans une pose différente en se basant sur l'erreur d'estimation de pose; dans lequel le repositionnement simultané comprend au moins une rotation simultanée des objets le long de l'axe central de chaque support d'une manière telle que les poses des objets sont couplées, et on répète l'estimation de pose jusqu'à ce que l'erreur d'estimation de pose pour la pluralité d'objets se situe dans les limites d'un critère d'acceptation de précision ; et,
- on inspecte la pluralité d'objets afin de déterminer une caractéristique d'objet; dans lequel l'inspection d'objet comprend le repositionnement de la pluralité d'objets en se basant sur la pose estimée correspondante, et l'acquisition d'une pluralité d'images de projection de la pluralité d'objets à au moins un deuxième facteur de grossissement qui est supérieur au premier facteur de grossissement de l'estimation de pose.

2. Procédé selon la revendication 1, dans lequel la pose est estimée en divisant l'image de projection acquise en une pluralité d'images de projection divisées ; dans lequel chaque image contient au moins un objet, de préférence en une pluralité d'images de projection divisées pour la pluralité d'objets, et en ajustant ledit au moins un modèle numérique de l'objet dans la pluralité d'images de projection divisées.

3. Procédé selon l'une quelconque des revendications précédentes, dans lequel l'estimation de la pose pour au moins un objet est affinée en calculant une pose avec une erreur d'estimation de pose qui se situe dans les limites d'un critère d'acceptation de précision en se basant sur au moins deux estimations de pose du même objet présentant des poses différentes.

4. Procédé selon l'une quelconque des revendications précédentes, dans lequel la pluralité d'objets est repositionnée de manière égale à une pose différente en se basant sur l'erreur d'estimation de pose ; et dans lequel l'estimation de pose pour au moins un objet est affinée en se basant sur l'estimation de pose d'un autre objet présentant une pose couplée.

5. Procédé selon la revendication 4, dans lequel la pluralité d'objets est repositionnée de manière équivalente à une pose différente en se basant sur l'erreur d'estimation de pose et à un angle de vue d'un dispositif d'imagerie par rayonnement acquérant l'image de projection.

6. Procédé selon l'une quelconque des revendications précédentes, l'estimation de pose est affinée se base sur une correspondance de modèles ; dans lequel ladite correspondance de modèles comprend le fait d'acquérir au moins une image de projection qui contient ledit objet avec une pose présentant une erreur d'estimation de pose qui se situe dans les limites du critère d'acceptation, la mise en correspondance de ladite image acquise avec une pluralité d'images de référence, dans lequel lesdites images de référence comprennent un ou plusieurs objets de référence dans une pluralité de poses certaines, de préférence adjacentes à la pose estimée, et la sélection d'une pose pour laquelle on obtient la plus grande précision de correspondance d'images.

7. Procédé selon l'une quelconque des revendications précédentes, dans lequel l'erreur d'estimation de pose pour la pose estimée se base sur la précision d'ajustement du modèle numérique pour une référence qui correspond à la pose estimée ; dans lequel ladite référence comprend un ou plusieurs objets de référence dans une ou plusieurs poses certaines; de préférence ,en ajustant ledit modèle sur une image acquise et/ou simulée dudit objet de référence.

8. Procédé selon l'une des revendications précédentes, dans lequel le critère d'acceptation se base sur la précision d'ajustement du modèle numérique pour une référence qui présente une pluralité de poses différentes ; dans lequel ladite référence comprend un ou plusieurs objets de référence dans une pluralité de poses certaines ; dans lequel ladite pluralité de poses de référence est divisée en au moins deux zones en se basant sur la valeur d'un seuil de précision, notamment une zone qui présente une erreur d'estimation de pose élevée et une zone qui présente une faible erreur d'estimation de pose ; et dans lequel l'estimation de pose est affinée de manière itérative jusqu'à ce que l'erreur d'estimation de pose se situe dans une zone qui présente une faible erreur d'estimation de pose.

9. Procédé selon l'une quelconque des revendications précédentes, dans lequel le procédé comprend l'estimation d'une pose pour la pluralité d'objets et l'affinement de l'estimation de pose en classant la pluralité d'objets en fonction de leur erreur d'estimation de pose ; de préférence en triant les objets par ordre croissant, en partant de l'objet présentant l'erreur d'estimation de pose la plus faible jusqu'à l'objet présentant l'erreur d'estimation de pose la plus élevée.

10. Procédé selon l'une quelconque des revendications précédentes, dans lequel l'inspection d'objet comprend le repositionnement d'au moins deux objets parmi la pluralité d'objets en se basant sur la pose estimée correspondante et sur un angle de vision du dispositif d'imagerie par rayonnement acquérant l'image de projection, et l'acquisition d'au moins une image de projection qui contient lesdits au moins deux objets à un deuxième facteur de grossissement qui est supérieur au facteur de grossissement de l'estimation de pose, et la répétition de l'inspection d'objet jusqu'à ce que chaque objet parmi la pluralité d'objets ait été inspecté.

11. Procédé mis en œuvre par ordinateur destiné à inspecter une pluralité d'objets à l'aide d'un système d'imagerie par rayonnement, dans lequel les objets sont montés sur un dispositif de fixation qui comprend une pluralité de supports qui sont couplés en rotation d'une manière telle que chaque objet monté sur l'un des supports est mis en rotation de manière simultanée jusqu'à un degré équivalent ; dans lequel le procédé comprend les étapes au cours desquelles :
- on reçoit au moins une image de projection qui contient la pluralité d'objets présentant un positionnement incertain, acquise à un premier facteur de grossissement ;
- on estime une pluralité de poses qui correspondent à la pluralité d'objets; dans lequel l'estimation de pose comprend l'ajustement d'un modèle numérique à la pluralité d'objets dans ladite image ; dans lequel ledit modèle numérique comprend une ou plusieurs simulations qui représentent de manière virtuelle l'objet dans une ou plusieurs poses, et on calcule une erreur d'estimation de pose qui représente la précision d'ajustement du modèle numérique pour la pluralité d'objets;
- on donne l'instruction au système d'imagerie par rayonnement de repositionner de manière simultanée la pluralité d'objets dans une pose différente en se basant sur l'erreur d'estimation de pose ; dans lequel le repositionnement comprend au moins une rotation le long de l'axe central de chaque support d'une manière telle que la pose des objets soit couplée ;
- on reçoit une image de projection qui contient la pluralité d'objets dans la pose différente et on affine de manière itérative l'estimation de pose jusqu'à ce que l'erreur d'estimation de pose pour la pluralité d'objets se situe dans les limites d'un critère d'acceptation de précision ;
- on donne l'instruction au système d'imagerie par rayonnement de repositionner de manière simultanée la pluralité d'objets en vue d'acquérir une image de projection à au moins un deuxième facteur de grossissement qui est supérieur au facteur de grossissement de l'estimation de pose ;
- on donne l'instruction au système d'imagerie par rayonnement de repositionner la pluralité d'objets en se basant sur la pose estimée correspondante ; et
- on reçoit une pluralité d'images de projection de la pluralité d'objets au deuxième facteur de grossissement.

12. Système d'imagerie par rayonnement destiné à inspecter une pluralité d'objets, qui comprend :
- un dispositif d'imagerie par rayonnement qui comprend une source de rayonnement et un détecteur qui est configuré pour acquérir une image de projection sous forme de données d'image ;
- un dispositif de fixation qui comprend une pluralité de supports permettant de fixer la pluralité d'objets dans une pose incertaine ; dans lequel les supports sont couplés en rotation d'une manière telle que chaque objet fixé à l'un des supports est soumis à une rotation de manière simultanée jusqu'à un degré équivalent, et un dispositif d'actionnement qui est configuré pour repositionner de manière simultanée la pluralité d'objets dans une pluralité de poses ; dans lequel le repositionnement simultané comprend au moins une rotation simultanée le long de l'axe central de chaque support ;
- un système de commande qui relié de manière opérationnelle au dispositif d'imagerie et au support et qui est configuré pour
- estimer une pluralité de poses qui correspondent à la pluralité d'objets en se basant dans des données d'image qui sont acquises par le dispositif d'imagerie ; dans lequel les données d'image comprennent au moins une image de projection qui contient la pluralité d'objets acquis à un premier facteur de grossissement ; dans lequel l'estimation de pose comprend l'ajustement d'un modèle numérique à la pluralité d'objets dans ladite image ; dans lequel le modèle numérique comprend une ou plusieurs simulations qui représentent de manière virtuelle l'objet dans une ou plusieurs poses, et le calcul d'une erreur d'estimation de pose qui représente la précision d'ajustement du modèle numérique pour la pluralité d'objets ;
- affiner de manière itérative l'estimation de pose en donnant l'instruction au support de repositionner de manière simultanée la pluralité d'objets dans une pose différente en se basant sur l'erreur d'estimation de pose ; dans lequel le repositionnement simultané comprend au moins une rotation simultanée le long de l'axe central de chaque support d'une manière telle que les poses des objets sont couplées, et répéter l'estimation de la pose jusqu'à ce que l'erreur d'estimation de pose pour la pluralité d'objets se situe dans les limites d'un critère d'acceptation ; et
- inspecter la pluralité d'objets afin de déterminer une caractéristique d'objet en se basant sur des secondes données d'image acquises par le dispositif d'imagerie ; dans lequel l'inspection d'objet comprend le fait de donner l'instruction au support de repositionner de manière simultanée la pluralité d'objets jusqu'à au moins un second facteur de grossissement qui est supérieur au facteur de grossissement de l'estimation de pose ; dans lequel les secondes données d'image comprennent une pluralité d'images de projection de la pluralité d'objets au second facteur de grossissement et la pose estimée correspondante pour l'inspection d'objet.

13. Système selon la revendication précédente, dans lequel le dispositif d'actionnement est configuré pour repositionner de manière égale la pluralité d'objets dans une pose différente en se basant sur l'erreur d'estimation de pose ; et le système de commande est configuré pour affiner l'estimation de pose pour au moins un objet en se basant sur l'estimation de pose d'un autre objet présentant une pose couplée ; de préférence, dans lequel le dispositif d'actionnement est configuré pour repositionner de manière équivalente la pluralité des objets dans une pose différente en se basant sur l'erreur d'estimation de pose et sur un angle de vision du dispositif d'imagerie par rayonnement.

14. Système selon l'une quelconque des revendications 12 à 13, dans lequel le dispositif d'imagerie par rayonnement est configuré pour acquérir une image de projection contenant la pluralité d'objets ; et le système de commande est configuré pour diviser ladite image de projection pour au moins un objet de la pluralité d'objets ; de préférence en une pluralité d'images de projection divisées pour la pluralité d'objets.

15. Système selon l'une quelconque des revendications 12 à 14, dans lequel le système de commande est configuré pour inspecter au moins un objet afin de déterminer une ou plusieurs caractéristiques de l'objet, telles que des défauts, en se basant sur des données d'image acquises par le dispositif d'imagerie à un facteur de grossissement supérieur au facteur de grossissement des données d'image acquises pour l'estimation de la pose.
